# EUROPEAN PATENT APPLICATION

(11) **EP 4 836 580 A1**
(43) Date of publication of application: **04.11.2026**
(21) Application number: 26175695.1
(22) Date of filing: 30.04.2026
(51) Int. Cl.: H04W 76/15, H04W 52/02, H04W 76/20, H04W 76/34, H04W 84/12

(54) **ENHANCED MODE MANAGEMENT TECHNIQUES FOR MULTI-LINK OPERATION**

(30) Priority: 01.05.2025 US 202563798369 P; 27.02.2026 US 202619552811
(71) Applicant: Apple Inc., Cupertino, CA 95014 (US)
(72) Inventor: GHOSH, Chittabrata, Cupertino, 95014 (US); WANG, Qi, Cupertino, 95014 (US); SEOK, Yong Ho, Cupertino, 95014 (US); MEHRNOUSH, Morteza, Cupertino, 95014 (US); LIU, Yong, Cupertino, 95014 (US); BATRA, Anuj, Cupertino, 95014 (US); PARK, Min Young, Cupertino, 95014 (US); KNECHT, Jarkko L., Cupertino, 95014 (US); SUN, Yanjun, Cupertino, 95014 (US); MONAJEMI, Pooya, Cupertino, 95014 (US)
(74) Representative: COPA Copenhagen Patents

(57) **Abstract**

A method including transmitting (1002), to an access point, AP, a frame comprising an operating mode indicator, wherein the operating mode indicator indicates enablement, disablement, or modification of an operating mode associated with a wireless link. The method further includes receiving (1004) a response from the AP and, based at least in part on the operating mode indicator and the response, enabling, disabling, or modifying (1006) the operating mode associated with the wireless link.

## Description

### FIELD

The present application relates to wireless communications, including enhanced techniques for mode management in multi-link operation among wireless stations and/or access points in a wireless networking system.

### DESCRIPTION OF THE RELATED ART

Wireless communication systems are rapidly growing in usage. Further, wireless communication technology has evolved from voice-only communications to also include the transmission of data, such as Internet and multimedia content. A popular short/intermediate range wireless communication standard is wireless local area network (WLAN). Most modern WLANs are based on the IEEE 802.11 standard (and/or 802.11, for short) and are marketed under the Wi-Fi brand name. WLAN networks link one or more devices to a wireless access point, which in turn provides connectivity to the wider area Internet.

In 802.11 systems, devices that wirelessly connect to each other are referred to as "stations", "mobile stations", "user devices", "user equipment", or STA or UE for short. Wireless stations can be either wireless access points or wireless clients (and/or mobile stations). Access points (APs), which are also referred to as wireless routers, act as base stations for the wireless network. APs transmit and receive radio frequency signals for communication with wireless client devices. APs can also couple to the Internet in a wired and/or wireless fashion. Wireless clients operating on an 802.11 network can be any of various devices such as laptops, tablet devices, smart phones, smart watches, or fixed devices such as desktop computers. Wireless client devices are referred to herein as user equipment (and/or UE for short). Some wireless client devices are also collectively referred to herein as mobile devices or mobile stations (although, as noted above, wireless client devices overall can be stationary devices as well).

Mobile electronic devices can take the form of smart phones, laptops, or tablets that a user typically carries. Wearable devices (also referred to as accessory devices) are a newer form of mobile electronic device, examples including smart watches, ear buds, and smart glasses. Additionally, low-cost low-complexity wireless devices intended for stationary or nomadic deployment are also proliferating as part of the developing "Internet of Things." In other words, there is an increasingly wide range of desired device complexities, capabilities, traffic patterns, and other characteristics.

Some WLANs can utilize multi-link operation (MLO), e.g., using a plurality of channels (e.g., links) concurrently. APs and/or STAs capable of MLO can be referred to as multi-link devices (MLD). For example, APs capable of MLO can be referred to as AP-MLDs and STAs capable of MLO that are not acting as APs can be referred to as non-AP MLDs. Improvements in the field are desired.

### SUMMARY

Embodiments described herein relate to methods, systems and apparatuses for enhanced mode management techniques in multi-link operation among wireless stations and/or access points in a wireless networking system.

In some embodiments, a method can include transmitting, to an access point (AP), a frame comprising an operating mode indicator indicating enablement, disablement, or modification of an operating mode associated with a wireless link. The method can also include receiving a response from the AP and, based at least in part on the operating mode indicator and the response, enabling, disabling, or modifying the operating mode associated with the wireless link.

According to some embodiments, the frame comprises a link reconfiguration request frame. Additionally or alternatively, the operating mode indicator can be included in a mode change element of the link reconfiguration request frame. Furthermore, the operating mode indicator can be included in a mode control field of the mode change element, according to some embodiments. Moreover and according to some embodiments, the mode change element can include at least one of a subelement identifiers (ID) corresponding to the operating mode, a mode control field indicating the enablement, disablement, or modification of the operating mode, or operating parameters associated with the operating mode.

In some embodiments, the operating mode indicator can include asubelement identifiers (ID) corresponding to the operating mode, and the operating mode comprises at least one of a dynamic unavailability operation (DUO) mode, a dynamic power save (DPS) mode, a non-primary channel access (NPCA) mode, a dynamic subband operation (DSO) mode, a coordinated beamforming (Co-BF) mode, a coordinated spatial refuse (Co-SR) mode, a low latency indication (LLI) mode, a dynamic bandwidth expansion (DBE) mode, or a limited operation mode (LOM). Additionally or alternatively, the method can further include using a per-station (per-STA) profile subelement to add or delete the wireless link, wherein the wireless link operates according to the operating mode.

According to other embodiments, an apparatus can include a processor configured to, when executing instructions stored in a memory, cause an access point (AP) multi-link device (MLD) to perform operations including transmitting, to a non-access point (non-AP) station (STA), a frame comprising an operating mode indicator indicating enablement, disablement, or modification of an operating mode associated with a wireless link. Additionally, the operations can include receiving a response from the non-AP STA and, based at least in part on the operating mode indicator and the response, enabling, disabling, or modifying the operating mode associated with the wireless link.

In some embodiments, the operating mode indicator can be included in an ordered bitmap to indicate at least one operating mode of one or more operating modes to enable, disable, or modify. Additionally or alternatively, the operating mode indicator can further indicate the presence of operation parameters for at least one operating mode of one or more operating modes.

According to some embodiments, the operating mode indicator can be included in a reconfiguration multi-link (ML) element. Furthermore, the operating mode indicator can be included in a mode enablement profile subelement corresponding to a subfield of a ML control field of the reconfiguration ML element. Additionally or alternatively, the operating mode indicator can be included in at least one of a station (STA) information field in a per-STA enablement profile subelement of the reconfiguration ML element. In some embodiments, the reconfiguration ML element can include one or more per-station (per-STA) profile subelements each comprising a station (STA) control field, wherein the STA control field comprises link identifier (ID) information and reconfiguration operation type information, and wherein the link ID information and reconfiguration operation type information are usable in enabling, disabling, or modifying the operating mode associated with the wireless link.

According to additional embodiments, a non-access point (non-AP) station (STA) can include a radio and a processor operably coupled to the radio and configured to cause the non-AP STA to transmit, to an access point (AP), a frame comprising an operating mode indicator indicating enablement, disablement, or modification of an operating mode associated with a wireless link. Additionally, the processor can be configured to cause the non-AP STA to receive a response from the AP, and, based at least in part on the operating mode indicator and the response, , enable, disable, or modify the operating mode associated with the wireless link.

In some embodiments, the operating mode indicator can include a feature enablement element. According to some embodiments, the processor may be further configured to cause the non-AP STA to initiate a first timer, wherein enabling, disabling, or modifying the operating mode associated with the wireless link is further based on expiry of the first timer. Additionally or alternatively, the response from the AP can be an acknowledgement (ACK) frame. In some embodiments, the first timer starts after reception of the ACK frame.

According to some embodiments, the processor can be further configured to cause the non-AP STA to receive, from the AP, a notification frame comprising another feature enablement element and transmit, to the AP, an acknowledgement (ACK) frame. Additionally or alternatively, enablement, disablement, or modification of the operating mode associated with the wireless link can be performed upon expiry of a second timer which starts after reception of the ACK frame.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system, according to some embodiments.
Figure 2 illustrates an example simplified block diagram of a wireless device, according to some embodiments.
Figure 3 illustrates an example WLAN communication system, according to some embodiments.
Figure 4 illustrates an example simplified block diagram of a WLAN Access Point (AP), according to some embodiments.
Figure 5 illustrates an example simplified block diagram of a wireless station (STA), according to some embodiments.
Figure 6 illustrates an example simplified block diagram of a wireless node, according to some embodiments.
Figures 7-8 illustrates examples of MLDs, according to some embodiments.
Figure 9 illustrates an example communication exchange between an AP and a STA attempting to transition to and from a dynamic power save (DPS) mode, according to some
Figure 10 is a communication flow diagram illustrating aspects of an enhanced method of mode management techniques for non-AP MLDs, according to some embodiments.
Figures 11A-B illustrate example field and element formats of a frame which can be used for mode enablement, according to some embodiments.
Figure 12 illustrates an example frame format of a link reconfiguration request frame for a mode change, according to some embodiments.
Figures 13A-C illustrate example aspects of a new subelement for a Link Info field of a reconfiguration ML element, according to some embodiments.
Figures 14A-B illustrate example aspects of a Per-STA Enablement Profile Subelement of a STA Info field, according to some embodiments.
Figures 15A-C illustrate example aspects of an operation parameters subfield of a STA Info field for different mode types, according to some embodiments.
Figures 16A-B illustrate example fields and formats of a link reconfiguration request frame, according to some embodiments.
Figures 17A-B illustrate example fields and formats of a link reconfiguration response frame format used for mode changes, according to some embodiments.
Figure 18 is a communication flow diagram illustrating aspects of an enhanced method of mode management techniques for AP MLDs, according to some embodiments.
Figures 19A-B illustrate example fields and formats of a link reconfiguration request frame used for UHR mode changes, according to some embodiments.
Figures 20A-B illustrate example element and subelement fields and formats in a link reconfiguration framework, according to some embodiments.
Figures 21A-B illustrate example fields and formats of LR request frame used for a UHR mode change, according to some embodiments.
Figure 22 illustrates example fields and formats of a Per-STA Profile subelement in Link Info field of Reconfiguration ML element, according to some embodiments.
Figure 23 illustrates example fields and a format of a Mode Change Element without Link ID/Bitmap, according to some embodiments.
Figure 24 illustrates example fields and a format of a mode change element in a reconfiguration ML element, according to some embodiments.
Figure 25 illustrates example fields and a format of a mode change element in a LR request frame, according to some embodiments.
Figures 26A-B illustrate example fields and formats of a mode change element with a corresponding link ID or bitmap, according to some embodiments.
Figure 27 illustrates example subfields and a format of an operation parameters field for a DPS mode, according to some embodiments.
Figure 28 is a communication flow diagram illustrating aspects of an enhanced method of mode management techniques including feature Enablement/Update/Disablement, according to some embodiments.
Figure 29 illustrates an enablement process using a feature enablement element, according to some embodiments.
Figure 30 illustrates example modal conditions for feature enablement or update, according to some embodiments.
Figure 31 illustrates a disablement process using a feature enablement element, according to some embodiments.
Figure 32 illustrates example modal conditions for feature disablement, according to some embodiments.
Figures 33A-G illustrate example aspects of fields and formats related to a first option of feature enablement element designs, according to some embodiments.
Figures 34A-G illustrate example aspects of fields and formats related to a second option of feature enablement element designs, according to some embodiments.
Figure 35 illustrates an example of inclusion of a feature enablement element in a link reconfiguration request frame, according to some embodiments.
Figure 36 illustrates an example of inclusion of a feature enablement element in a link reconfiguration notify frame, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

may notmay notmay notmay not

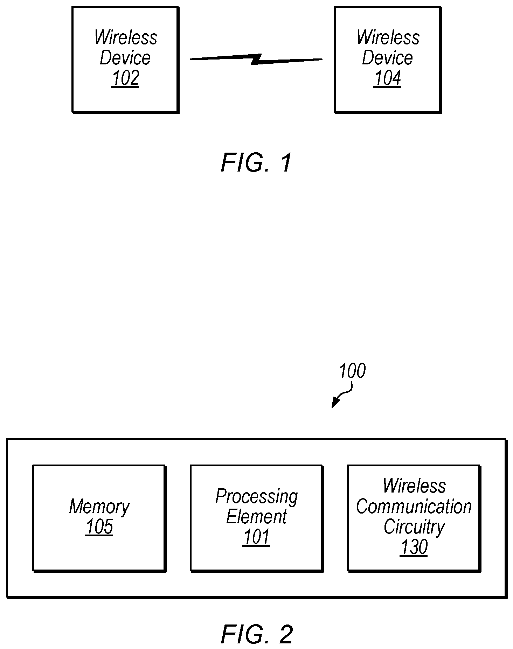

### Figures 1-2 - Wireless Communication System

Figure 1 illustrates an exemplary (and simplified) wireless communication system in which aspects of this disclosure can be implemented. It is noted that the system of Figure 1 is merely one example of a possible system, and embodiments of this disclosure can be implemented in any of various systems, as desired.

As shown, the exemplary wireless communication system includes a ("first") wireless device 102 in communication with another ("second") wireless device 104. The first wireless device 102 and the second wireless device 104 can communicate wirelessly using any of a variety of wireless communication techniques, potentially including ranging wireless communication techniques.

As one possibility, the first wireless device 102 and the second wireless device 104 can perform ranging using wireless local area networking (WLAN) communication technology (e.g., IEEE 802.11 / Wi-Fi based communication) and/or techniques based on WLAN wireless communication. One or both of the wireless device 102 and the wireless device 104 can also be capable of communicating via one or more additional wireless communication protocols, such as any of Bluetooth (BT), Bluetooth Low Energy (BLE), near field communication (NFC), LTE, LTE-Advanced (LTE-A), NR, ultra-wideband (UWB), etc.

The wireless devices 102 and 104 can be any of a variety of types of wireless device. As one possibility, one or more of the wireless devices 102 and/or 104 can be a substantially portable wireless user equipment (UE) device, such as a smart phone, hand-held device, a wearable device such as a smart watch, a tablet, a motor vehicle, or virtually any type of wireless device. As another possibility, one or more of the wireless devices 102 and/or 104 can be a substantially stationary device, such as a set top box, media player (e.g., an audio or audiovisual device), gaming console, desktop computer, appliance, door, access point, base station, or any of a variety of other types of devices.

Each of the wireless devices 102 and 104 can include wireless communication circuitry configured to facilitate the performance of wireless communication, which can include various digital and/or analog radio frequency (RF) components, a processor that is configured to execute program instructions stored in memory, a programmable hardware element such as a field-programmable gate array (FPGA), and/or any of various other components. The wireless device 102 and/or the wireless device 104 can perform any of the method embodiments described herein, or any portion of any of the method embodiments described herein, using any or all of such components.

Each of the wireless devices 102 and 104 can include one or more antennas for communicating using one or more wireless communication protocols. In some cases, one or more parts of a receive and/or transmit chain can be shared between multiple wireless communication standards; for example, a device might be configured to communicate using either of Bluetooth or Wi-Fi using partially or entirely shared wireless communication circuitry (e.g., using a shared antenna and/or shared radio components). The shared communication circuitry can include a single antenna, or can include multiple antennas (e.g., for MIMO) for performing wireless communications. Alternatively, a device can include separate transmit and/or receive chains (e.g., including separate antennas and other radio components) for each wireless communication protocol with which it is configured to communicate. As a further possibility, a device can include one or more radios or radio components which are shared between multiple wireless communication protocols, and one or more radios or radio components which are used exclusively by a single wireless communication protocol. For example, a device might include a shared radio for communicating using one or more of LTE and/or 5G NR, and separate radios for communicating using Wi-Fi, UWB, and/or Bluetooth. Other configurations are also possible.

As previously noted, aspects of this disclosure can be implemented in conjunction with the wireless communication system of Figure 1. For example, a wireless device (e.g., either of wireless devices 102 or 104) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

Figure 2 illustrates an exemplary wireless device 100 (e.g., corresponding to wireless devices 102 and/or 104) that can be configured for use in conjunction with various aspects of the present disclosure. The device 100 can be any of a variety of types of devices and can be configured to perform any of a variety of types of functionality. The device 100 can be a substantially portable device or can be a substantially stationary device, potentially including any of a variety of types of devices. The device 100 can be configured to perform one or more ranging wireless communication techniques or features, such as any of the techniques or features illustrated and/or described subsequently herein with respect to any or all of the Figures.

As shown, the device 100 can include a processing element 101. The processing element can include or be coupled to one or more memory elements. For example, the device 100 can include one or more memory media (e.g., memory 105), which can include any of a variety of types of memory and can serve any of a variety of functions. For example, memory 105 could be RAM serving as a system memory for processing element 101. Other types and functions are also possible.

Additionally, the device 100 can include wireless communication circuitry 130. The wireless communication circuitry can include any of a variety of communication elements (e.g., antenna(s) for wireless communication, analog and/or digital communication circuitry/controllers, etc.) and can enable the device to wirelessly communicate using one or more wireless communication protocols.

Note that in some cases, the wireless communication circuitry 130 can include its own processing element (e.g., a baseband processor), e.g., in addition to the processing element 101. For example, the processing element 101 can be an 'application processor' whose primary function can be to support application layer operations in the device 100, while the wireless communication circuitry 130 can be a 'baseband processor' whose primary function can be to support baseband operations (e.g., to facilitate wireless communication between the device 100 and other devices) in the device 100. In other words, in some cases the device 100 can include multiple processing elements (e.g., can be a multi-processor device). Other configurations (e.g., instead of or in addition to an application processor / baseband processor configuration) utilizing a multi-processor architecture are also possible.

The device 100 can additionally include any of a variety of other components (not shown) for implementing device functionality, depending on the intended functionality of the device 100, which can include further processing and/or memory elements (e.g., audio processing circuitry), one or more power supply elements (which can rely on battery power and/or an external power source) user interface elements (e.g., display, speaker, microphone, camera, keyboard, mouse, touchscreen, etc.), and/or any of various other components.

The components of the device 100, such as processing element 101, memory 105, and wireless communication circuitry 130, can be operatively coupled via one or more interconnection interfaces, which can include any of a variety of types of interfaces, possibly including a combination of multiple types of interface. As one example, a USB high-speed inter-chip (HSIC) interface can be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces can be used for communications between various device components. Other types of interfaces (e.g., intra-chip interfaces for communication within processing element 101, peripheral interfaces for communication with peripheral components within or external to device 100, etc.) can also be provided as part of device 100.

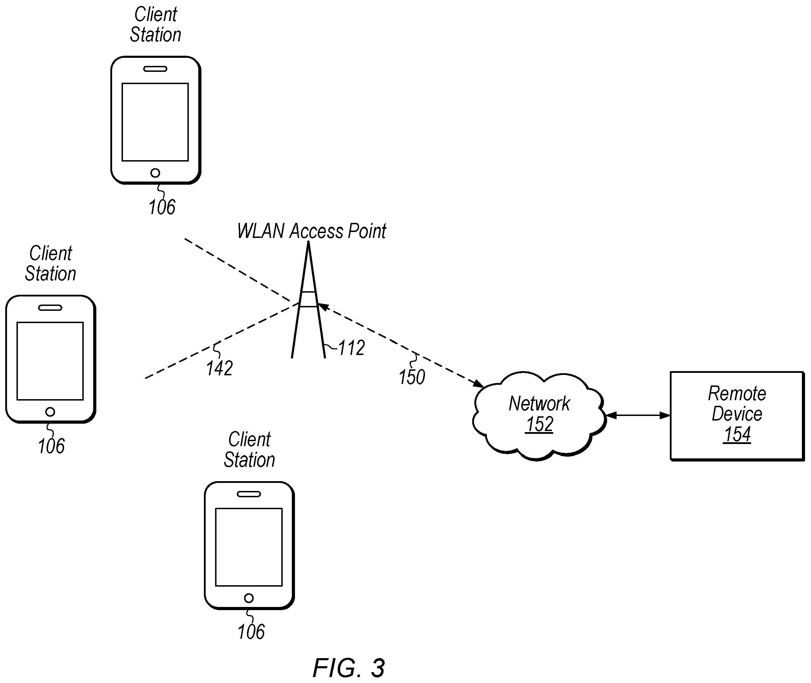

### Figure 3 - WLAN System

Figure 3 illustrates an example WLAN system according to some embodiments. As shown, the exemplary WLAN system includes a plurality of wireless client stations or devices (e.g., STAs or user equipment (UEs)), 106 that are configured to communicate over a wireless communication channel 142 with an Access Point (AP) 112. The AP 112 can be a Wi-Fi access point. The AP 112 can communicate via a wired and/or a wireless communication channel 150 with one or more other electronic devices (not shown) and/or another network 152, such as the Internet. Additional electronic devices, such as the remote device 154, can communicate with components of the WLAN system via the network 152. For example, the remote device 154 can be another wireless client station, a server associated with an application executing on one of the STAs 106, etc. The WLAN system can be configured to operate according to any of various communications standards, such as the various IEEE 802.11 standards. In some embodiments, at least one wireless device 106 is configured to communicate directly with one or more neighboring mobile devices, without use of the access point 112.

Further, in some embodiments, a wireless device 106 (which can be an exemplary implementation of device 100) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

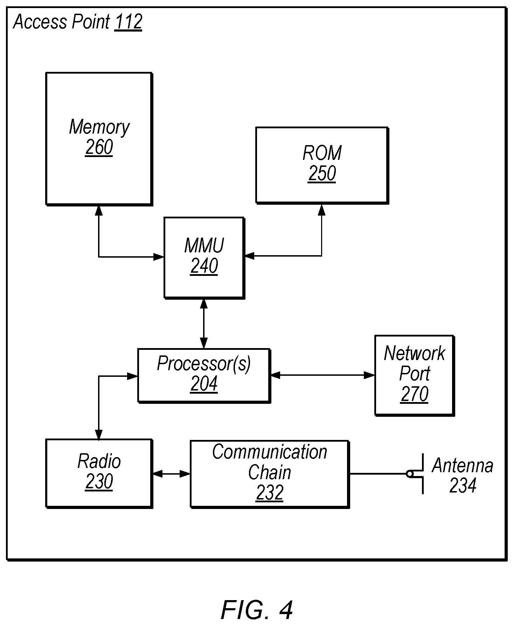

### Figure 4 - Access Point Block Diagram

Figure 4 illustrates an exemplary block diagram of an access point (AP) 112, which can be one possible exemplary implementation of the device 100 illustrated in Figure 4. It is noted that the block diagram of the AP of Figure 4 is only one example of a possible system. As shown, the AP 112 can include processor(s) 204 which can execute program instructions for the AP 112. The processor(s) 204 can also be coupled (directly or indirectly) to memory management unit (MMU) 240, which can be configured to receive addresses from the processor(s) 204 and to translate those addresses to locations in memory (e.g., memory 260 and read only memory (ROM) 250) or to other circuits or devices.

The AP 112 can include at least one network port 270. The network port 270 can be configured to couple to a wired network and provide a plurality of devices, such as mobile devices 106, access to the Internet. For example, the network port 270 (and/or an additional network port) can be configured to couple to a local network, such as a home network or an enterprise network. For example, port 270 can be an Ethernet port. The local network can provide connectivity to additional networks, such as the Internet.

The AP 112 can include at least one antenna 234, which can be configured to operate as a wireless transceiver and can be further configured to communicate with mobile device 106 via wireless communication circuitry 230. The antenna 234 communicates with the wireless communication circuitry 230 via communication chain 232. Communication chain 232 can include one or more receive chains, one or more transmit chains or both. The wireless communication circuitry 230 can be configured to communicate via Wi-Fi or WLAN, e.g., 802.11. The wireless communication circuitry 230 can also, or alternatively, be configured to communicate via various other wireless communication technologies, including, but not limited to, Long-Term Evolution (LTE), LTE Advanced (LTE-A), 5G NR, etc., for example when the AP is co-located with a base station in case of a small cell, or in other instances when it can be desirable for the AP 112 to communicate via various different wireless communication technologies.

Further, in some embodiments, as further described below, AP 112 can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

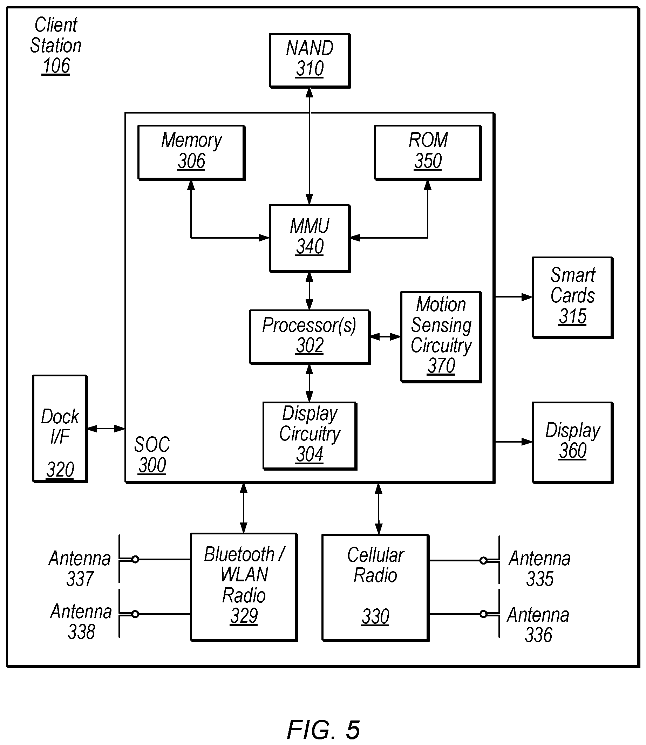

### Figure 5 - Client Station Block Diagram

Figure 5 illustrates an example simplified block diagram of a client station 106, which can be one possible exemplary implementation of the device 100 illustrated in Figure 4. According to embodiments, client station 106 can be a user equipment (UE) device, a mobile device or mobile station, and/or a wireless device or wireless station. As shown, the client station 106 can include a system on chip (SOC) 300, which can include portions for various purposes. The SOC 300 can be coupled to various other circuits of the client station 106. For example, the client station 106 can include various types of memory (e.g., including NAND flash 310), a connector interface (I/F) (and/or dock) 320 (e.g., for coupling to a computer system, dock, charging station, etc.), the display 360, cellular communication circuitry (e.g., cellular radio) 330 such as for 5G NR, LTE, etc., and short to medium range wireless communication circuitry (e.g., Bluetooth^{™}/WLAN radio) 329 (e.g., Bluetooth^{™} and WLAN circuitry). The client station 106 can further include one or more smart cards 315 that incorporate SIM (Subscriber Identity Module) functionality, such as one or more UICC(s) (Universal Integrated Circuit Card(s)). The cellular communication circuitry 330 can couple to one or more antennas, such as antennas 335 and 336 as shown. The short to medium range wireless communication circuitry 329 can also couple to one or more antennas, such as antennas 337 and 338 as shown. Alternatively, the short to medium range wireless communication circuitry 329 can couple to the antennas 335 and 336 in addition to, or instead of, coupling to the antennas 337 and 338. The short to medium range wireless communication circuitry 329 can include multiple receive chains and/or multiple transmit chains for receiving and/or transmitting multiple spatial streams, such as in a multiple-input multiple output (MIMO) configuration. Some or all components of the short to medium range wireless communication circuitry 329 and/or the cellular communication circuitry 330 can be used for ranging communications, e.g., using WLAN, Bluetooth, and/or cellular communications.

As shown, the SOC 300 can include processor(s) 302, which can execute program instructions for the client station 106 and display circuitry 304, which can perform graphics processing and provide display signals to the display 360. The SOC 300 can also include motion sensing circuitry 370 which can detect motion of the client station 106, for example using a gyroscope, accelerometer, and/or any of various other motion sensing components. The processor(s) 302 can also be coupled to memory management unit (MMU) 340, which can be configured to receive addresses from the processor(s) 302 and translate those addresses to locations in memory (e.g., memory 306, read only memory (ROM) 350, NAND flash memory 310) and/or to other circuits or devices, such as the display circuitry 304, cellular communication circuitry 330, short range wireless communication circuitry 329, connector interface (I/F) 320, and/or display 360. The MMU 340 can be configured to perform memory protection and page table translation or set up. In some embodiments, the MMU 340 can be included as a portion of the processor(s) 302.

As noted above, the client station 106 can be configured to communicate wirelessly directly with one or more neighboring client stations. The client station 106 can be configured to communicate according to a WLAN RAT for communication in a WLAN network, such as that shown in Figure 3 or for ranging as shown in Figure 1.

As described herein, the client station 106 can include hardware and software components for implementing the features described herein. For example, the processor 302 of the client station 106 can be configured to implement part or all of the features described herein, e.g., by executing program instructions stored on a memory medium (e.g., a non-transitory computer-readable memory medium). Alternatively (and/or in addition), processor 302 can be configured as a programmable hardware element, such as an FPGA (Field Programmable Gate Array), or as an ASIC (Application Specific Integrated Circuit). Alternatively (and/or in addition) the processor 302 of the UE 106, in conjunction with one or more of the other components 300, 304, 306, 310, 315, 320, 329, 330, 335, 336, 337, 338, 340, 350, 360, 370 can be configured to implement part or all of the features described herein.

In addition, as described herein, processor 302 can include one or more processing elements. Thus, processor 302 can include one or more integrated circuits (ICs) that are configured to perform the functions of processor 302. In addition, each integrated circuit can include circuitry (e.g., first circuitry, second circuitry, etc.) configured to perform the functions of processor(s) 204.

Further, as described herein, cellular communication circuitry 330 and short-range wireless communication circuitry 329 can each include one or more processing elements. In other words, one or more processing elements can be included in cellular communication circuitry 330 and also in short range wireless communication circuitry 329. Thus, each of cellular communication circuitry 330 and short-range wireless communication circuitry 329 can include one or more integrated circuits (ICs) that are configured to perform the functions of cellular communication circuitry 330 and short-range wireless communication circuitry 329, respectively. In addition, each integrated circuit can include circuitry (e.g., first circuitry, second circuitry, etc.) configured to perform the functions of cellular communication circuitry 330 and short-range wireless communication circuitry 329.

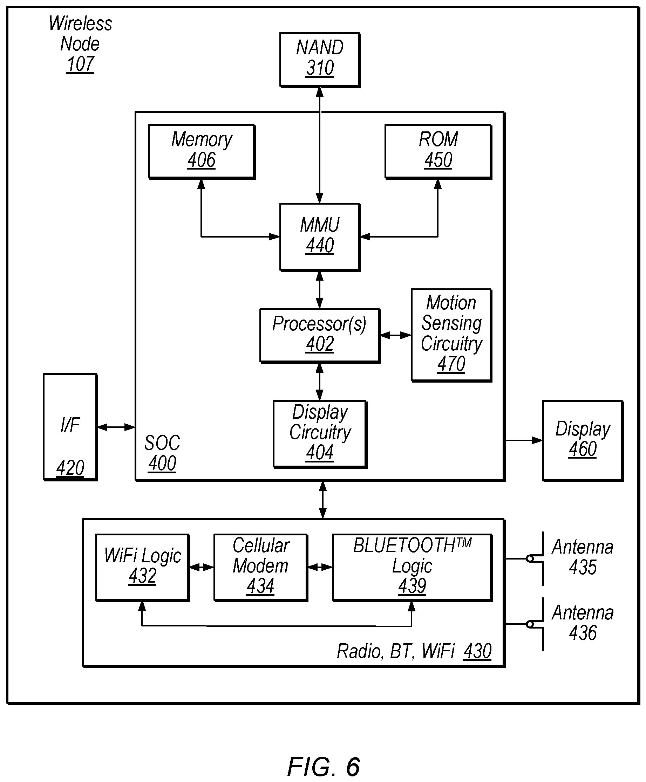

### Figure 6 - Wireless Node Block Diagram

Figure 6 illustrates one possible block diagram of a wireless node 107, which can be one possible exemplary implementation of the device 100 illustrated in Figure 6. As shown, the wireless node 107 can include a system on chip (SOC) 400, which can include portions for various purposes. For example, as shown, the SOC 400 can include processor(s) 402 which can execute program instructions for the wireless node 107, and display circuitry 404 which can perform graphics processing and provide display signals to the display 460. The SOC 400 can also include motion sensing circuitry 470 which can detect motion of the wireless node 107, for example using a gyroscope, accelerometer, and/or any of various other motion sensing components. The processor(s) 402 can also be coupled to memory management unit (MMU) 440, which can be configured to receive addresses from the processor(s) 402 and translate those addresses to locations in memory (e.g., memory 406, read only memory (ROM) 450, flash memory 410). The MMU 440 can be configured to perform memory protection and page table translation or set up. In some embodiments, the MMU 440 can be included as a portion of the processor(s) 402.

As shown, the SOC 400 can be coupled to various other circuits of the wireless node 107. For example, the wireless node 107 can include various types of memory (e.g., including NAND flash 410), a connector interface 420 (e.g., for coupling to a computer system, dock, charging station, etc.), the display 460, and wireless communication circuitry 430 (e.g., for 5G NR, LTE, LTE-A, Bluetooth, Wi-Fi, NFC, etc.).

The wireless node 107 can include at least one antenna, and in some embodiments, multiple antennas 435 and 436, for performing wireless communication with base stations and/or other devices. For example, the wireless node 107 can use antennas 435 and 436 to perform the wireless communication. As noted above, the wireless node 107 can in some embodiments be configured to communicate wirelessly using a plurality of wireless communication standards or radio access technologies (RATs).

The wireless communication circuitry 430 can include Wi-Fi Logic 432, a Cellular Modem 434, and Bluetooth Logic 439. The Wi-Fi Logic 432 is for enabling the wireless node 107 to perform Wi-Fi communications, e.g., on an 802.11 network. The Bluetooth Logic 439 is for enabling the wireless node 107 to perform Bluetooth communications. The cellular modem 434 can be capable of performing cellular communication according to one or more cellular communication technologies. Some or all components of the wireless communication circuitry 430 can be used for ranging communications, e.g., using WLAN, Bluetooth, and/or cellular communications.

As described herein, wireless node 107 can include hardware and software components for implementing embodiments of this disclosure. For example, one or more components of the wireless communication circuitry 430 (e.g., Wi-Fi Logic 432) of the wireless node 107 can be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

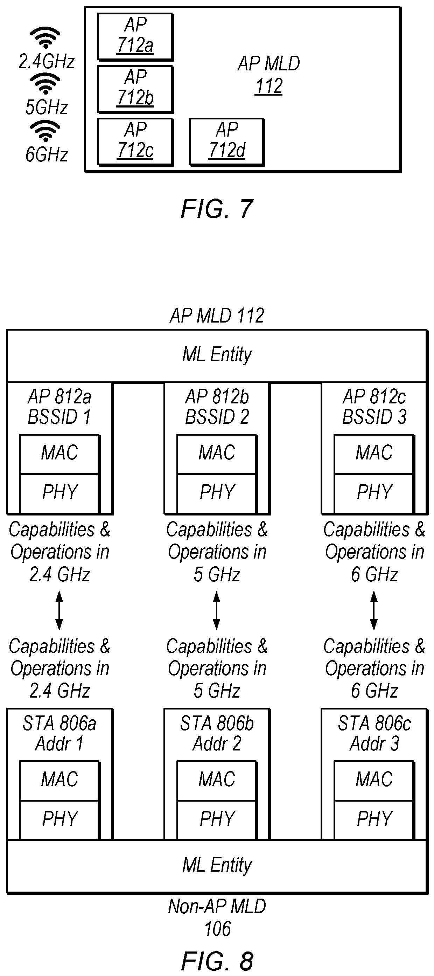

### Figures 7-8 - Multi-Link Device (MLD) operation

One or more IEEE 802.11 releases, such as IEEE 802.11bi, can include Multi-link Device (MLD) capabilities. In current implementations, an access point (AP) Multi Link Device (MLD) node can manage its affiliated APs. Thus, an AP MLD node can modify, add, and/or subtract affiliated APs. The AP MLD can do so for a variety of reasons, e.g., to increase capacity, manage Basic Service Sets (BSSs) interference and/or coverage, including by switching one or more APs to operate in channels with less interference and/or steering associated non-AP MLD nodes to operate on better performing APs and/or AP MLD nodes.

Figure 7 illustrates an AP MLD 112, according to some embodiments. The AP MLD can operate any number of affiliated APs, e.g., APs 712a, 712b, 712c, and 712d in the illustrated example. The affiliated APs can operate on any of various frequency bands. Affiliated APs can operate on different frequency ranges (e.g., channels) of the same band, or on different frequency bands.

The AP MLD can provide the affiliated APs from a single physical device, e.g., a single shared housing and potentially using one or more of the same antenna(s). In some embodiments, the AP MLD can provide the APs from multiple distinct devices (e.g., a first device can provide one or more APs, a second device can provide a different one or more APs, etc.). In some embodiments, various affiliated APs can be separated spatially (e.g., using beams in different directions, using different antennas with a shared housing (e.g., antennas of a same physical device), and/or of different devices, etc.).

In some embodiments, spatially separated affiliated APs can operate on a same (or overlapping) channel(s).

Figure 8 illustrates an AP MLD 112 in communication with a non-AP MLD 106, according to some embodiments.

As shown, the AP MLD 112 can operate three affiliated APs. In the illustrated example, AP 812a can operate in a 2.4 GHz band, AP 812b can operate in a 5 GHz band, and AP 812c can operate in a 6 GHz band. It will be appreciated that any number of affiliated APs can be used in any combination of bands. For example, the AP MLD can operate multiple affiliated APs in one band and/or possibly not operate any affiliated APs in a band. The affiliated APs can include components that process one or more layers, e.g., media access control (MAC) and/or physical (PHY) layers, among various possibilities. The affiliated APs can use different basic service sets (BSS) and/or different BSS identifiers (BSSID), e.g., BSSIDs 1-3.

As shown, the non-AP MLD 106 can operate three affiliated STAs, e.g., corresponding to the three affiliated APs. In the illustrated example, STA 806a can operate in the 2.4 GHz band, STA 806b can operate in a 5 GHz band, and STA 806c can operate in a 6 GHz band. The STAs can communicate with the corresponding APs. It will be appreciated that any number of affiliated STAs can be used in any combination of bands. For example, the non-AP MLD can operate multiple affiliated STAs in one band and/or possibly not operate any affiliated STAs in a band. The non-AP MLD can operate STAs corresponding to some, none, or all of the APs of the AP MLD. The affiliated STAs can include various layers, e.g., PHY and/or MAC layers, among various possibilities. The affiliated STAs can use different addresses, e.g., Addr 1-3.

The non-AP MLD can provide the affiliated STAs from a single physical device, e.g., a single shared housing and potentially using one or more of the same antenna(s). In some embodiments, the non-AP MLD can provide the STAs from multiple distinct devices (e.g., a first device can provide one or more STAs, a second device can provide a different one or more STAs, etc.). In some embodiments, various affiliated STAs can be separated spatially (e.g., using beams in different directions, using different antennas with a shared housing (e.g., antennas of a same physical device), and/or of different devices, etc.).

In some implementations, the various affiliated STAs and APs can communicate concurrently / simultaneously. For example, STA 806a can exchange uplink and/or downlink data with AP 812a on a first link while STA 806b exchanges uplink and/or downlink data with AP 812b on a second link, etc. It will be appreciated that such concurrent communication can include (e.g., different) data being exchanged at the same time, at least partially overlapping times, and/or different times on different links. For example, data between the AP MLD and non-AP MLD can be routed over the first available link and/or a link selected based on other criteria (e.g., lowest energy use, etc.). For example, a first packet or portion of data can be sent over a first link and concurrently a second packet or portion of data can be sent over a second link.

In some embodiments, the AP MLD and non-AP MLD can include respective ML entities. An ML entity can provide upper MAC functionality that control the separate APs and/or STAs and can control traffic delivery through available links, e.g. between the various APs and STAs. The respective MLDs (e.g., AP and non-AP) can have only one respective MAC Service Access Point (SAP) interface. The ML entity can manage this interface. The ML entity can manage transmission buffering (e.g., bookkeeping and link selection in the transmitter) and data re-order buffering in reception (e.g., combination of the data that is transmitted in different links).

The AP MLD 112 and non-AP MLD 106 can exchange information about their respective operations, operating parameters, and/or capabilities.

The non-AP MLD can have various capabilities for operating a STA in a particular band. The capabilities can be different for different bands. For example, the capabilities in a band can describe the maximum (e.g., fastest, most flexible, most powerful, highest throughput, etc.) parameter values that a STA of the non-AP MLD can use. Operations or operating parameters can describe the parameter values that are currently in use or planned to be in use at a future time.

For example, the parameters can include an applicable PHY version and its parameters. The parameters can describe supported services and transmission formats that are available. The parameters can also describe available resources, bandwidths and number of spatial streams. The parameters can describe power save support parameters which can enable low power transmissions. For instance, an AP can support Target Wake Time (TWT) power save.

In some embodiments, the links can be located so closely (e.g., spatially and/or in frequency), that a non-AP STA may not be able to operate them independently (e.g., due to limits of the device and/or to manage resources or performance). APs can support STAs (e.g., non-AP MLDs) that are not capable of simultaneously transmitting and receiving on the link pair.

In some embodiments, the non-AP MLD can operate STAs communicating with multiple AP-MLDs. For example, a first STA can communicate with a first AP MLD and a second STA can communicate with a second AP MLD. Similarly, an AP MLD can communicate with multiple STAs. For example, one affiliated AP can communicate with multiple STAs.

In the illustrated example, the non-AP MLD operates a number of STAs equal to the number of APs provided by the AP MLD. However, different numbers are possible. For example, the AP MLD can provide more APs than the number of STAs operated by the non-AP MLD or vice versa. The number of APs and/or number of STAs can change over time.

According to some embodiments, it can be beneficial for client privacy enhanced (CPE) stations (STAs) (or clients) to change or adjust certain parameters used for performing communications with an AP. For example, eavesdroppers can seek to intercept, extract or listen in on communications between certain CPE STAs and APs. Accordingly, clients can seek to perform more secure communications between the CPE STAs and APs using various techniques involving address changing or related parameter adjustments.

For example, it can be beneficial for a CPE Client to change its own over-the-air (OTA) media access control (MAC) address used for communicating with an AP when reassociating from one CPE AP to another CPE AP. Additionally or alternatively, it can be beneficial for a CPE Client to initiate changing its own OTA MAC address used with a CPE AP in an associated state (e.g., STA State 4) without any loss of connection. In some embodiments, it can be beneficial for a CPE Client to initiate changing the OTA MAC addresses of all associated CPE Client's in the basic service set (BSS) (e.g., those CPE Clients in associated STA State 4) simultaneously without any loss of connection. Furthermore, it can be beneficial for a CPE client and CPE AP to change the transmitted sequence number (SN), packet number (PN) and traffic identifier (TID) to an uncorrelated new value on downlink and uplink to new values in an associated STA State 4, without any loss of connection, according to some embodiments. Moreover, it can be further beneficial for a CPE Client and CPE AP to change the CPE Client's association identifier (AID) to an uncorrelated new value in an associated STA State 4, without any loss of connection.

### Mode Management for Multi-Link Operation

In recent Wi-Fi releases, changes of modes (e.g., enablement, disablement, or modification/updating) may have been performed on a per-link basis due to some cross link mode changes not being supported. For example, if a non-AP MLD wanted to enter a power saving (PS) mode on all of the links, the non-AP MLD and AP MLD may have been previously required to perform separate frame exchanges (e.g., to change the mode) over each of the enabled links. However, this per-link frame exchange (e.g., separate frame exchanges) to change the mode can be inefficient and could cause long delays for STAs of non-AP MLDs to enter a PS mode in which they can transition to a sleep (e.g., doze) state. Accordingly, improved methods for mode management are desired in order to increase efficiency and to provide better interoperability and flexibility between non-AP MLDs and AP MLDs.

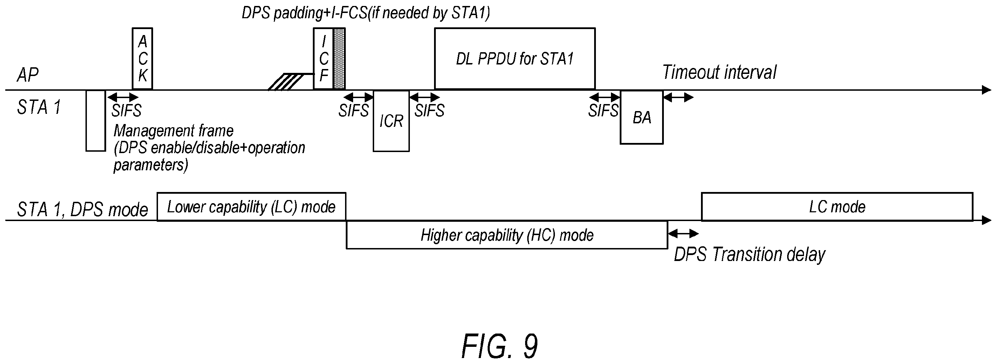

### Figure 9 - Dynamic Power Save (DPS) Mode Changes

Figure 9 illustrates an example communication exchange between an AP and a STA attempting to transition to and from a DPS mode, according to some embodiments. A DPS mode can in some instances be characterized as a power saving feature or mode in which an ultra- STA (e.g., such as a high reliability (UHR) STA as one example) can remain in a lower capability mode (LCM) until receiving an initial control frame (ICF), according to some embodiments. Upon reception of the ICF, the STA can transition to a higher capability mode (HCM) and optionally remain in this mode for the remaining duration of a transmission opportunity (TXOP).

For example and as shown in Figure 9, a non-AP MLD (e.g., STA 1) can send a management frame on a link to enable the DPS mode, according to some embodiments. The STA (e.g., a non-AP MLD) could potentially be operating in a lower capability (LC) mode in the link, and, upon reception of an ICF in the LC mode, transition to a higher capability (HC) mode for the remaining TXOP duration, according to some embodiments.

In some embodiments, the ICF can be transmitted in non-high throughput (non-HT) physical layer protocol data unit (PPDU) at a rate of 6 Mbps, 12 Mbps, or 24 Mbps (with other data transfer rates being possible). Additionally, the ICF can include an intermediate frame check sequence (FCS) if the STA has requested this mode change during enablement. Furthermore and after a timeout interval, the STA can transition back to the LC mode after a DPS transition delay. According to some embodiments, the timeout interval can be characterized by a time associated with a sum of parameters including but not limited to a SIFS (e.g., aSIFSTime) parameter, a slot duration (e.g., aSlotTime) parameter, and/or a physical layer reception delay (e.g., aRxPHYStartDelay) parameter.

In some embodiments, if the UHR STA (e.g., a UHR non-AP STA or a UHR Mobile AP) is operating according to a DPS mode associated with the UHR STA's transition from a LCM to a HCM (e.g., upon reception of an ICF), then its associated peer STA that supports transmitting an intermediate FCS can optionally include an intermediate FCS (if needed by the STA) in the ICF that it transmits to the UHR STA, according to some embodiments. Alternatively, an intermediate FCS may not be needed if the UHR STA requires no padding, according to some embodiments.

In some embodiments, a parameter update mechanism based on management level signaling may be used to allow a non-AP STA to transition in and/or out of a limited operation or capability mode. For example, a STA in a limited operation or capability mode can change one or more transmit (TX) or receive (RX) parameters including but not limited to a maximum PPDU duration, a maximum modulation and coding scheme (MCS), a low density parity check (LDPC), a high throughput (HT) immediate block acknowledgement (ACK), a disabled subchannel bitmap, among various other parameters, according to some embodiments. Accordingly, it can be beneficial for management level signaling to be defined for different modes of operation of a UHR STA.

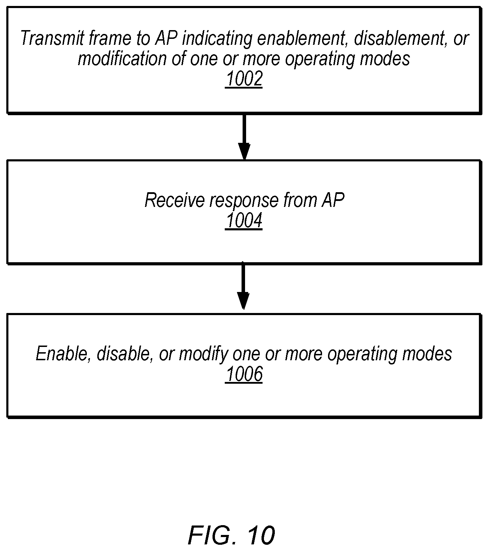

### Figure 10 - Enhanced Methods of Mode Management for non-AP MLDs

Figure 10 is a communication flow diagram illustrating aspects of an enhanced method of mode management for non-AP MLDs, according to some embodiments. Such methods can aid in providing more efficient and flexible mode management procedures (as compared to legacy methods) and subsequently reduce power consumption among AP MLDs and non-AP MLDs.

For example, Figure 10 illustrates an example enhanced method of mode management performed by a non-AP MLD, according to some embodiments. Aspects of the method of Figure 10 can be implemented by a non-AP MLD in communication with an AP MLD. The AP MLD and/or non-AP MLD can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP, and/or AP, and/or other device(s) to perform such method elements.

Note that while at least some elements of the method of Figure 10 are described in a manner relating to the use of communication techniques and/or features associated with IEEE and/or 802.11 (e.g., 802.11be) specification documents, such description is not intended to be limiting to the disclosure, and aspects of the method of Figure 10 can be used in any suitable wireless communication system, as desired. Similarly, while elements of the method of Figure 10 are described in a manner relating to non-APs (e.g., STAs) that can be MLDs or UHR MLDs, such description is not intended to be limiting to the disclosure, and aspects of the method of Figure 10 can be used by non-APs that are not MLDs or UHR MLDs, as desired. Additionally, while some aspects of the method of Figure 10 can be implemented by a non-AP MLD, some corresponding steps related to the method of Figure 10 can be performed by an AP MLD in which the non-AP MLD is communicating with.

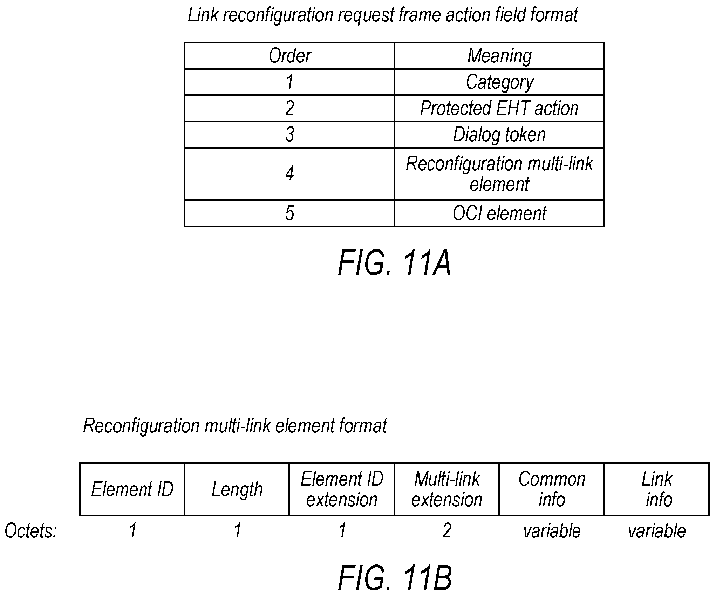

The methods shown can be used in conjunction with any of the systems, methods, or devices shown in the Figures (such as Figures 11-17, for example), among other devices. In various embodiments, some of the method elements shown can be performed concurrently, in a different order than shown, or can be omitted. Additional method elements can also be performed as desired. As shown, this method can operate as follows.

At 1002, a non-AP STA can transmit a frame to an AP indicating enablement, disablement, or modification of one or more operating modes, according to some embodiments. For example, the method can include transmitting, to the AP, a frame comprising at least one indicator indicating enablement, disablement, or modification of one or more operating modes respectively associated with one or more wireless links. According to some embodiments, the frame can be a link reconfiguration request frame.

In some embodiments, the at least one indicator can be included in a mode change element in the link reconfiguration request frame. Furthermore, the at least one indicator can be included in a mode control field of the mode change element, according to some embodiments. Moreover and according other embodiments, the mode change element can include information including at least one of one or more subelement identifiers (IDs) corresponding to the one or more operating modes, a mode control field indicating the enablement, disablement, or modification of the one or more operating modes, or operating parameters of the one or more operating modes.

In some embodiments, the at least one indicator can include one or more subelement identifiers (IDs) corresponding to the one or more operating modes. Additionally the one or more operating modes can include at least one of a dynamic unavailability operation (DUO) mode, a dynamic power save (DPS) mode, a non-primary channel access (NPCA) mode, a dynamic subband operation (DSO) mode, a coordinated beamforming (Co-BF) mode, a coordinated spatial refuse (Co-SR) mode, a low latency indication (LLI) mode, a dynamic bandwidth expansion (DBE) mode, and/or a limited operation mode (LOM).

At 1004, the non-AP STA can receive a response from the AP, according to some embodiments. In some embodiments, the response can include an acknowledgement (ACK) frame. Additionally or alternatively, the response can include an initial control frame (ICF).

At 1006, the non-AP STA can enable, disable, or modify the one or more operating modes, according to some embodiments. For example, the non-AP STA can, based at least in part on the at least one indicator and reception of the response, enable, disable, or modify the one or more operating modes respectively associated with one or more wireless links.

According to some embodiments, the method can further include using a per-station (per-STA) profile subelement to add or delete at least one wireless link of the one or more wireless links, wherein the at least one wireless link operates according to at least one of the one or more operating modes.

### Figures 11A-B - Using Link Reconfiguration Request Frame for Mode Enablement

Figures 11A-B illustrate example field and element formats of a frame which can be used for mode enablement, according to some embodiments. For example, Figure 11A illustrates an example format of a link reconfiguration request (LRR) frame action field and Figure 11B illustrates an example format of a reconfiguration multi-link (ML) element.

Figure 11A illustrates an example LRR frame action field format which can include orders 1-5 corresponding to different meanings. For example, order 1 can be associated with a category, order 2 can be associated with a protected extremely high throughput (EHT) action, order 3 can be associated with a dialog token, order 4 can be associated with a reconfiguration ML element, and order 5 can be associated with an OCI element, according to some embodiments.

Figure 11B illustrates an example reconfiguration ML element format including fields such as an element ID, length, element ID extension (each 1 octet in size), a 2 octet ML control, and common and link information (e.g., info) fields of variable octet size, according to some embodiments.

In some embodiments, it can be beneficial to use a link reconfiguration request or notify frame to enable or disable modes of operations (e.g., DPS). These request or notify frames can be used for roaming preparation and roaming execution phases of seamless roaming, according to some embodiments. Accordingly, there can be specific advantages of using these frames for mode enablement or disablement. For example, if a non-AP MLD intends to add a link and enable an 802.11 feature (e.g., DPS in 802.11bn), the non-AP MLD can use at least one of these frames to support both these functions concurrently, according to some embodiments. Similarly, if a non-AP intends to delete a link and disable an existing feature on this link, the non-AP MLD can use at least one of these frames to support these functions concurrently. In some instances, the link reconfiguration notify frame can be sent by an AP MLD as described in previous specifications (e.g., 802.11be).

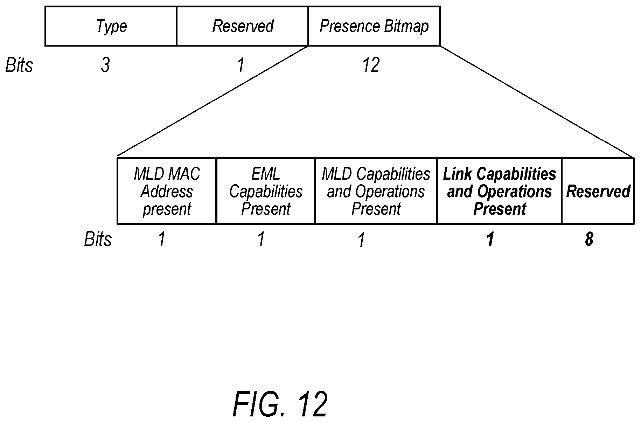

### Figure 12 - Link Reconfiguration Request Frame for Mode Change

Figure 12 illustrates an example frame format of a link reconfiguration request frame for a mode change, according to some embodiments. For example, an action frame (e.g., such as a LR request frame) can be characterized as a category protected EHT and can be used for DPS enablement or disablement. Additionally and in previous 802.11 releases (e.g. , 802.11be), this LR request frame could possibly have been used by a non-AP MLD to request addition or deletion of link(s) to its ML setup, according to some embodiments.

For example and as shown in Figure 12, the LR request frame can include a 3 bit Type field, a 1 bit Reserved field and a 12 bit Presence Bitmap, according to some embodiments. Furthermore, the 12 bit Presence Bitmap can include a 1 bit MLD MAC Address Present field, a 1 bit EML Capabilities Present field, and a 1 bit MLD Capabilities and Operations Present Field. In some embodiments, the Type subfield in the Multi-Link Control field can indicate a Reconfiguration Multi-Link element.

Additionally and as shown in the bolded portions of Figure 12, a 1 bit Link Capabilities and Operations Present Field and an 8 bit Reserved field can also be included in the 12-bit Presence Bitmap, according to some embodiments. In other words and in order to facilitate mode enablement or disablement, a 1 bit Link Capabilities and Operations Present subfield can be added to the Presence Bitmap subfield in the ML Control field, according to some embodiments. Furthermore, an 8 bit Reserved field can also be included in the ML control field format of Figure 12.

In other words, the 1 bit Link Capabilities and Operations Present subfield can be included as a single reconfiguration ML element in an action field. Accordingly, this field can be set to 1 if a non-AP MLD intends to enable a mode (e.g., DPS) in a setup link. Additionally and if the value is set to 1, the Common Info field may not be present in the Link Reconfiguration Request frame, according to some embodiments.

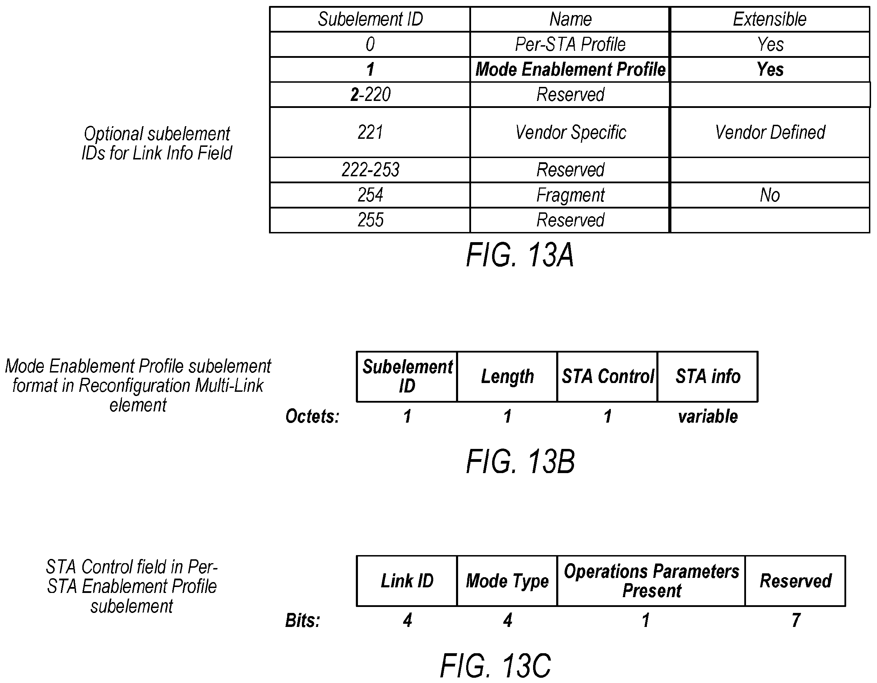

### Figures 13A-C - New Link Info Field Subelement

Figures 13A-C illustrate example aspects of a new subelement for a Link Info field of a reconfiguration ML element, according to some embodiments. Figure 13A illustrates different subelements of the Link Info field as well as their respective identifiers, names, and whether they are extensible (e.g., able to be extended). For example, subelement ID 0 name be associated with a Per-STA profile and further be extensible, IDs 2-220, 222-253, and 255 can be reserved, ID 221 can be vendor specific with a vendor defined extensibility, and ID 254 can be a non-extensible fragment. In some embodiments, the Link Info field can include a subelement ID 1 associated with an extensible mode enablement profile which can be used to enable or disable modes.

As shown in Figure 13B, this subelement ID=1 (e.g., the mode enablement profile) can be characterized by a format including 1 octet Subelement ID, Length, and STA Control fields as well as a variable size STA Info field, according to some embodiments. Furthermore and as illustrated in Figure 13C, the STA Control field and can include 4 bit Link ID and Mode Type subfields, a 1 bit Operation Parameters Present subfield, and a 7 bit reserved subfield. According to some embodiments, the STA Control field can indicate the type of mode a STA intends to enable or disable, the Link ID subfield can indicate the link where the feature is intended to be enabled or disabled, the Mode Type subfield can indicate the type of mode that a STA intends to enable or disable, the Operation Parameters Present subfield can indicate the parameters needed to enable the type of mode signaled in Mode Type subfield, and the STA Info field can indicate operation parameters for the enabled mode.

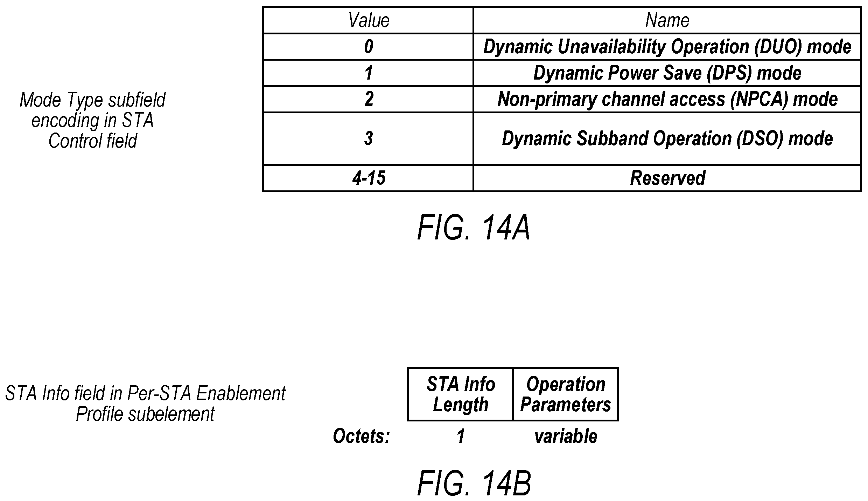

### Figures 14A-B - STA Info field in Per-STA Enablement Profile Subelement

Figures 14A-B illustrate example aspects of a Per-STA Enablement Profile Subelement of a STA Info field, according to some embodiments. For example, Figure 14A illustrates an example Mode Type subfield of a STA Control field, according to some embodiments. The Mode Type subfield of Figure 14A can include values associated with different mode types including a value of 0 associated with a dynamic unavailability operation (DUO) mode, a value of 1 associated with a DPS mode, a value of 2 associated with a non-primary channel access (NPCA) mode, a value of 3 associated with a dynamic subband operation (DSO) mode, and values 4-15 being reserved, according to some embodiments.

Additionally, the STA Info field can include a 1 octet STA Info Length subfield which can indicate the number of octets in the STA Info field. According to some embodiments, this subfield is included if a variable octet Operation Parameters Present subfield is set to a value of 1 in the STA Control field. Furthermore, the Operation Parameters subfield can indicate the parameters that are needed when the mode corresponding to the value indicated in Mode Type subfield in STA Control field is enabled, according to some embodiments.

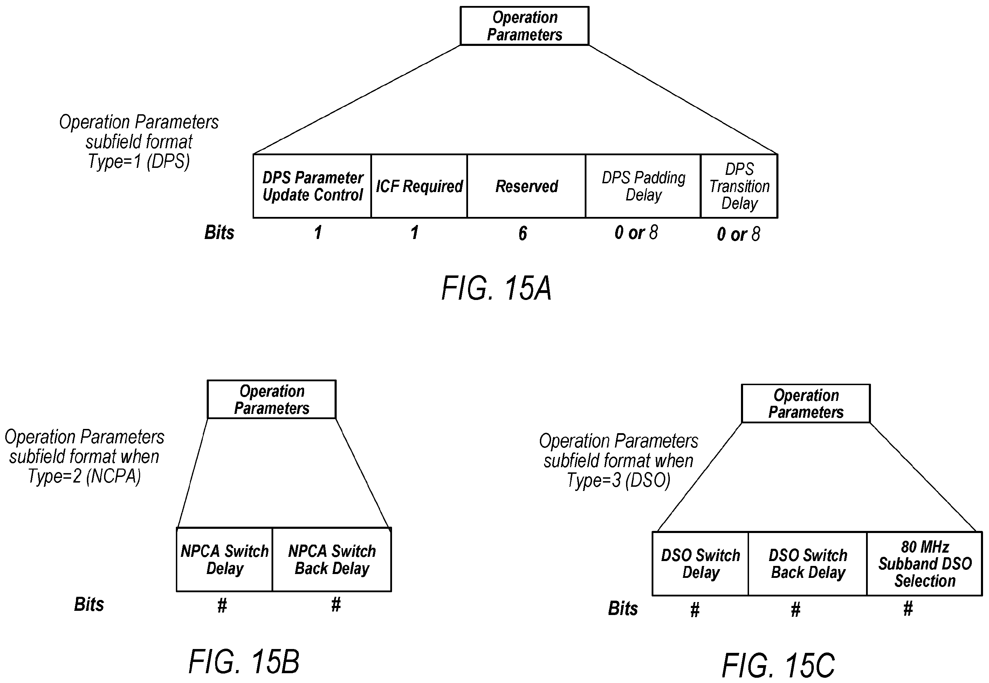

### Figures 15A-C - Operation Parameters Subfields of the STA Info Field

Figures 15A-C illustrate example aspects of an operation parameters subfield of a STA Info field for different mode types, according to some embodiments. For example, Figure 15A illustrates an example operation parameters subfield format for a Mode Type subfield value = 1 (e.g., DPS mode), according to some embodiments. Additionally and if the Operation Parameters Present subfield is set to 1 in the STA Control field, the Operation Parameters subfield in STA Info field can contain a 1 bit DPS Parameter Update Control subfield which can indicate whether updated DPS padding delay and DPS Transition Delay values are present with respect to transmitted value in a last transmitted UHR Mode Enablement Notification frame. Furthermore, if this subfield is set to 1, the DPS Padding Delay and DPS Transition Delay subfields can be present in the subfield format illustrated in Figure 15A. Moreover, if this subfield is set to 1 with a non-zero value in the DPS Padding Delay subfield, this can indicate that a STA that has enabled DPS mode requires an intermediate FCS (I-FCS) in a ICF, according to some embodiments.

The Operations Parameters subfield format can also include a 1 bit ICF Required subfield which can indicate whether the STA needs an ICF and ICR exchange prior to any frame exchange initiated with a DPS STA, according to some embodiments. For example, the ICF Required subfield can be set to 0 if an ICF and/or ICR is required only for frame exchanges that use HCM parameters. Alternatively, the ICF Required subfield can be set to 1 if an ICF and/or ICR is required for all frame exchanges. In some instances, the 1 bit ICF Required subfield can be used to indicate for a DPS STA to transition from a low capability mode (LCM) to a high capability mode (HCM).

In some embodiments, the DPS Padding Delay subfield can indicate an updated value of a DPS padding delay ranging from 0-64 (in resolution/increments of 4 microseconds (µs)). Additionally, the DPS Transition Delay subfield can indicate an updated value of a DPS transition delay ranging from 0-64 (in resolution/increments of 4 microseconds (µs)).

According to some embodiments, when the Mode Type subfield value is set to a value of 0 (e.g., indicating DUO mode) in the STA Control field, the Operation Parameters Present subfield can be set to 0 and feedback information can be provided in a Multi-STA block acknowledgement (BA) as an ICR frame. Additionally, when the Mode Type subfield value is set to a value of 0 (e.g., indicating DUO mode), the STA Info field may not be present in the Mode Enablement Profile subelement, according to some embodiments.

Figure 15B illustrates an example operation parameters subfield format for a Mode Type subfield value = 2 (e.g., NPCA mode), according to some embodiments. For example, when the Mode Type subfield value is set to a value of 2 (NPCA mode) in the STA Control field, the Operation Parameters Present subfield can be set to a value of 1 and the STA Info field can contain NPCA switch delay and NPCA switch back delay subfields with corresponding bit values, according to some embodiments.

Figure 15C illustrates an example operation parameters subfield format for a Mode Type subfield value = 3 (e.g., DSO mode), according to some embodiments. For example, when the Mode Type subfield value is set to a value of 3 (DSO mode) in the STA Control field, the Operation Parameters Present subfield can be set to a value of 1 and the STA Info field can contain DSO switch delay, DSO switch back delay, and 80 MHz DSO subband selection (if the basic service set (BSS) bandwidth (BW) is 320MHz) subfields with corresponding bit values, according to some embodiments.

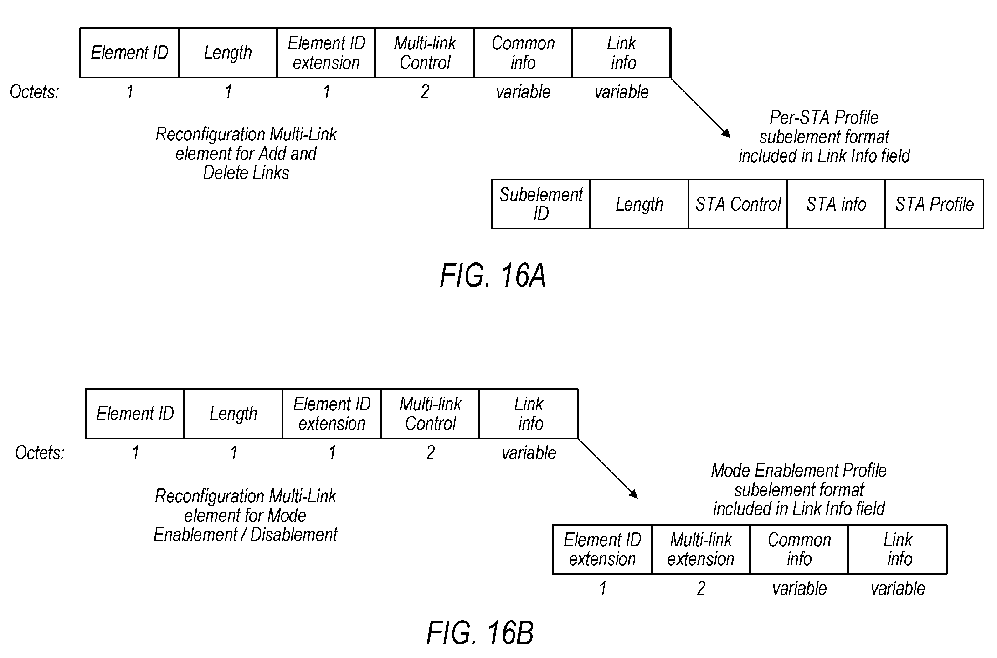

### Figures 16A-B - Link Reconfiguration Request Frame Formats

Figures 16A-B illustrate example fields and formats of a link reconfiguration request frame, according to some embodiments. For example, Figure 16A illustrates a Reconfiguration ML element for Adding and Deleting Links as well as a Per-STA Profile subelement format included in the Link Info field of said Reconfiguration ML element. As shown in Figure 16A, the Reconfiguration ML element for adding and deleting links can include single octet size Element ID, Length, and Element ID Extension fields, a 2 octet ML Control field, and variable octet size Common Info and Link Info fields, according to some embodiments. Furthermore, the ML Control field can include subfields such as MLD MAC Address Present, EML Capabilities Present, and MLD Capabilities Present.

In some embodiments, one or multiple Per-STA Profile subelements can be included in the Link Info field for one or multiple link reconfigurations. The Per-STA Profile subelement format shown in Figure 16A can include fields such as Subelement ID, Length, STA Control, STA Info, and STA Profile. Furthermore, the STA Control field can include subfields such as Link ID, Complete Profile, and Reconfiguration Operation Type = Add Link (Value = 2), according to some embodiments.

Moreover and as shown in Figure 16B, the Reconfiguration ML element for mode enablement or disablement can include single octet size Element ID, Length, and Element ID Extension fields, a 2 octet ML Control field, and variable octet size Common Info field, according to some embodiments. Furthermore, the ML Control field can include subfields such as MLD MAC Address Present, EML Capabilities Present, and MLD Capabilities Present which can be set to values of zero. Additionally, the ML Control field can include a Link Capabilities and Operations Present field set to a value of 1. In this case, the Common Info field may not be present in the Reconfiguration ML element (as shown in Figure 16B). In other words, when the Link Capabilities and Operations Present field is equal to 1, the Common Info field is not present in the Reconfiguration ML element for mode enablement or disablement.

In some embodiments, one or multiple Mode Enablement Profile subelements can be included in the Link Info field for single or multiple mode changes. The Mode Enablement Profile subelement format shown in Figure 16B can include fields such as Subelement ID, Length, STA Control, and STA Info. Furthermore, the STA Control field can include subfields such as Link ID, Mode Type (e.g., DUO, DPS, NPCA, DSO, among other possible modes) and the STA Info field can include an Operations Parameters subfield, according to some embodiments.

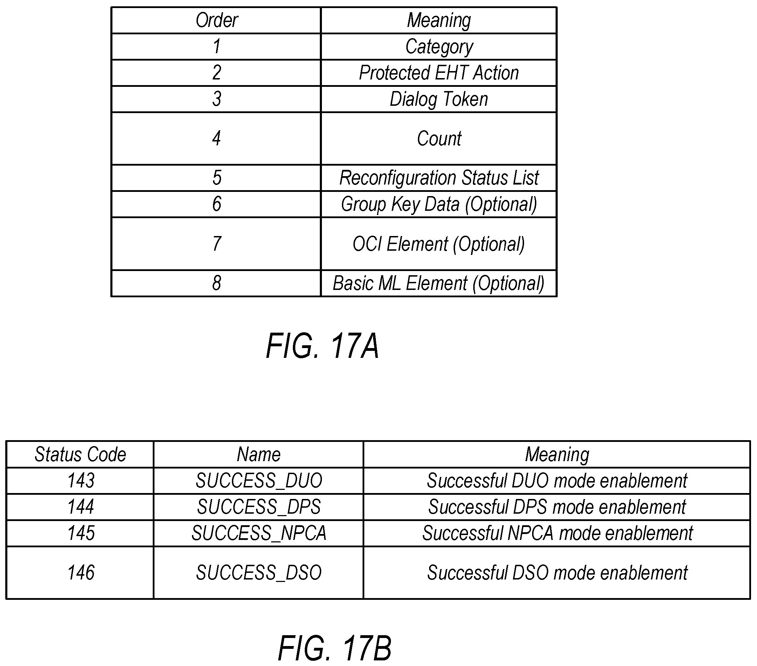

### Figures 17A-B - Link Reconfiguration Response Frame Format

Figures 17A-B illustrate example fields and formats of a link reconfiguration response frame format used for mode changes, according to some embodiments. For example, Figure 17A illustrates a link reconfiguration response frame action field format including orders 1-8 and their associated meanings. For example, a first order can be associated with a Category, a second order can be associated with a Protected EHT Action, a third order can be associated with a Dialog Token, a fourth order can be associated with a Count, a fifth order can be associated with a Reconfiguration Status List, a sixth order can be associated with an optional Group Key Data, a seventh order can be associated with an optional OCI element, and an eighth order can be associated with an optional basic ML element, according to some embodiments.

In some embodiments, the Link Reconfiguration Response frame can include a count which indicates a number of reconfiguration status duple (e.g., Link ID Info, Status) in the Reconfiguration Status List. Additionally, the Link Reconfiguration Response frame can include a Link ID Info subfield to indicate a link identifier of the AP that is indicated for addition to or deletion from an existing ML setup in a corresponding Link Reconfiguration Request frame, according to some embodiments. Moreover, the Link Reconfiguration Response frame can include a Status subfield which indicates the status of the link reconfiguration operation for the link corresponding to the Link ID Info subfield, according to some embodiments.

It can be further beneficial to define new status codes of rejection (e.g., subcarrier spacing (SCS) stream rejection with a suggested quality of service (QoS) Characteristics element), denial (e.g., Traffic Identifier to Link Mapping (TTLM), and/or Emergency Preparedness Communication Service (EPCS)).

For example, Figure 17B illustrates example status codes 143, 144, 145, and 146 which can indicate successful enablement of DUO, DPS, NPCA, and DSO modes, according to some embodiments. In other words, Figure 17B illustrates new Status codes for mode enablement or disablement in a Status subfield. Accordingly, when the Link Reconfiguration Response frame is used for a mode change, the Link ID Info subfield indicates a link identifier for which the mode is intended to be enabled. Furthermore the value in this subfield can be the same as the value in the Link Reconfiguration Request frame, according to some embodiments.

In some embodiments, it may be necessary for a response frame to include certain information and/or be transmitted according to certain parameters based on receiving a request for a mode change. For example, when a UHR non-AP STA intends to enable the DPS mode by sending a request frame, it may be necessary for a response frame to be transmitted after the AP is ready to serve the non-AP STA in DPS mode.

According to some embodiments, the AP can transmit a Link Reconfiguration Response frame with Status Code 144 in a Status subfield in Reconfiguration Status List field. Furthermore, a value in Count subfield and number of reconfiguration status duple can be equal to the number of the Mode Enablement Profile subelements included in the Link Reconfiguration Request frame. Moreover, Subfields relating to Group Key Data, OCI element, and Basic Multi-Link element may not be present in some instances.

In other embodiments, DUO mode can be enabled with its associated DUO assisting AP by sending a request frame and receiving a response frame transmission after the AP is ready to serve the non-AP STA in DUO mode. In other words, the AP can accept the request to enable the DUO mode at the STA side and the enablement procedure.

For example, the AP can transmit a Link Reconfiguration Response frame with Status Code 143 in a Status subfield in a Reconfiguration Status List field, according to some embodiments. Furthermore, a value in the Count subfield and number of reconfiguration status duple can be equal to the number of the Mode Enablement Profile subelements included in Link Reconfiguration Request frame. In some embodiments, subfields relating to Group Key Data, OCI element, and Basic Multi-Link element may not be present.

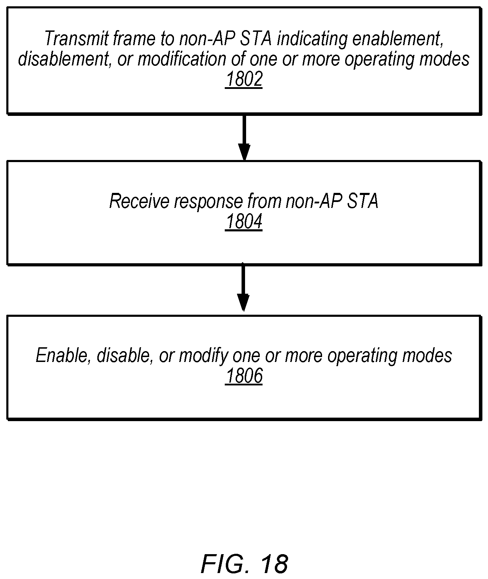

### Figure 18 - Enhanced Method of Mode Management Techniques for AP MLDs

Figure 18 is a communication flow diagram illustrating aspects of an enhanced method of mode management techniques for AP MLDs, according to some embodiments. Such techniques can aid in providing more efficient and flexible mode management procedures (as compared to legacy methods) and subsequently reduce power consumption among AP MLDs and non-AP MLDs.

For example, Figure 18 illustrates an example enhanced method of mode management performed by an AP MLD, according to some embodiments. Aspects of the method of Figure 18 can be implemented by an AP MLD in communication with an non-AP MLD. The AP MLD and/or non-AP MLD can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP, and/or AP, or other device to perform such method elements.

Note that while at least some elements of the method of Figure 18 are described in a manner relating to the use of communication techniques and/or features associated with IEEE and/or 802.11 (e.g., 802.11be) specification documents, such description is not intended to be limiting to the disclosure, and aspects of the method of Figure 18 can be used in any suitable wireless communication system, as desired. Similarly, while elements of the method of Figure 18 are described in a manner relating to non-APs that can be MLDs or UHR MLDs, such description is not intended to be limiting to the disclosure, and aspects of the method of Figure 18 can be used by non-APs that are not MLDs or UHR MLDs, as desired. Additionally, while some aspects of the method of Figure 18 can be implemented by an AP MLD, some corresponding steps related to the method of Figure 18 can be performed by a non-AP MLD in which the AP MLD is communicating with.

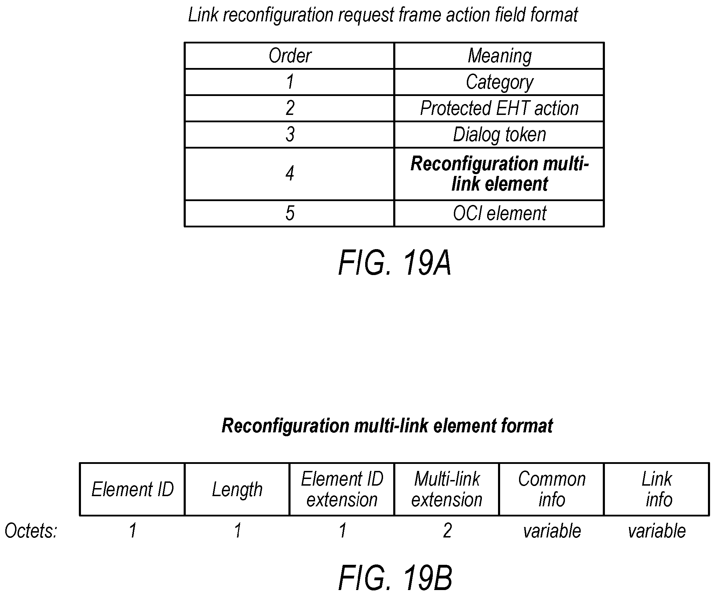

The methods shown can be used in conjunction with any of the systems, methods, or devices shown in the Figures (such as Figures 19-27 for example), among other devices. In various embodiments, some of the method elements shown can be performed concurrently, in a different order than shown, or can be omitted. Additional method elements can also be performed as desired. As shown, this method can operate as follows.

At 1802, the AP can transmit a frame to a non-AP STA indicating enablement, disablement, or modification of one or more operating modes, according to some embodiments. For example, the AP can transmit, to the non-AP STA, a frame comprising at least one indicator indicating enablement, disablement, or modification of one or more operating modes respectively associated with one or more wireless links.

In some embodiments, the at least one indicator can be included in an ordered bitmap to indicate at least one operating mode of the one or more operating modes to enable, disable, or modify. Additionally or alternatively, the at least one indicator can further indicate the presence of operation parameters for the at least one operating mode of the one or more operating modes.

According to some embodiments, the at least one indicator can be included in a reconfiguration multi-link (ML) element. Furthermore, the at least one indicator can be included in a mode enablement profile subelement corresponding to a subfield of a ML control field of the reconfiguration ML element. Additionally or alternatively, the at least one indicator can be included in at least one of a station (STA) information field in a per-STA enablement profile subelement of the reconfiguration ML element. In some embodiments, the reconfiguration ML element can include one or more per-station (per-STA) profile subelements each comprising a station (STA) control field. Furthermore, the STA control field can includelink identifier (ID) information and reconfiguration operation type information, according to some embodiments. In some instances, the link ID information and reconfiguration operation type information can be used for enabling, disabling, or modifying the one or more operating modes respectively associated with the one or more wireless links.

At 1804, the AP can receive a response from the non-AP STA, according to some embodiments. In some embodiments, the response can include an acknowledgement (ACK) frame.

At 1806, the AP can enable, disable, or modify one or more operating modes, according to some embodiments. For example, the AP can, based at least in part on the at least one indicator and receiving the response, enable, disable, or modify the one or more operating modes respectively associated with one or more wireless links.

### Figures 19A-B - UHR Mode Change Using Link Reconfiguration Request Frame

Figures 19A-B illustrate example fields and formats of a link reconfiguration request frame used for UHR mode changes, according to some embodiments. For example, Figure 19A illustrates a link reconfiguration request frame action field format which can include orders 1-5 corresponding to different meanings. For example, order 1 can be associated with a category, order 2 can be associated with a protected extremely high throughput (EHT) action, order 3 can be associated with a dialog token, order 4 can be associated with a reconfiguration ML element, and order 5 can be associated with an OCI element, according to some embodiments.

Figure 19B illustrates an example reconfiguration ML element format including fields such as an element ID, length, element ID extension (each 1 octet in size), a 2 octet ML control, and common and link information (e.g., info) fields of variable octet size, according to some embodiments.

According to some embodiments, a frame exchange for mode enablement or disablement can include transmission of a Link Reconfiguration (LR) Request frame and receiving a LR Notify frame as a response frame. Additionally and unlike the LR Response frame, a LR Notify frame may not contain a Status code with an Accept or Reject decision.

However, there can be specific advantages of using the LR frame exchange for UHR mode changes. For example, Reconfiguration Multi-Link elements in a LR Request frame can be beneficially used for cross-link signaling of mode enablement or disablement across links. As link addition and mode enablement or disablement can be indicated using a single frame exchange, this may allow for a more efficient method of mode change(s).

For example, a LR Request frame can carry a single Reconfiguration ML element and the type of ML element can be indicated in the ML Control field of the element. Additionally or alternatively, a Per-STA Profile subelement in a Link Info field can contain information about addition or deletion of links.

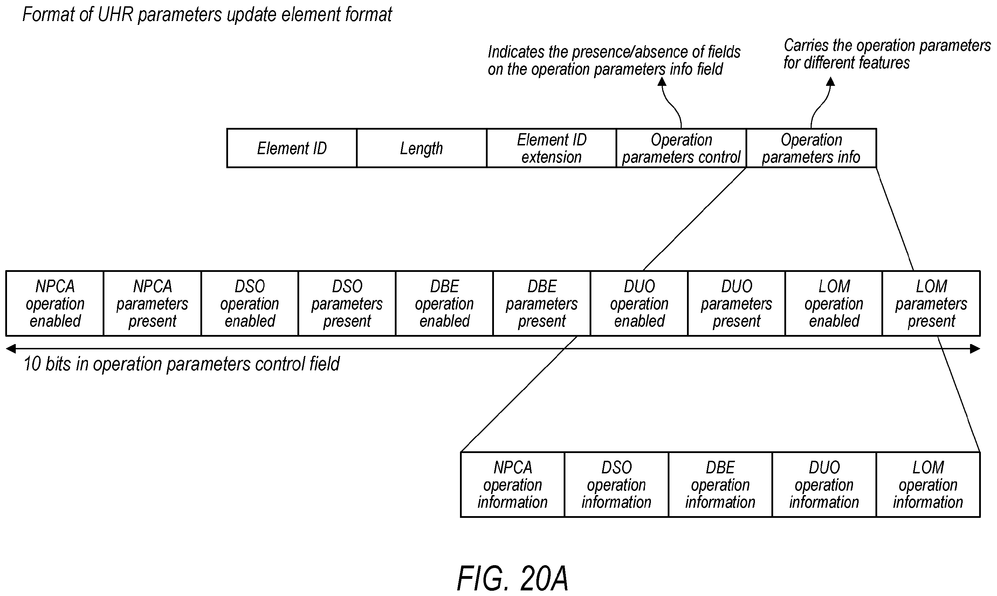

### Figures 20A-B - UHR Mode Change Using Link Reconfiguration Framework

Figures 20A-B illustrate example element and subelement fields and formats in a link reconfiguration framework, according to some embodiments. For example, Figure 20A illustrates a format of a UHR Parameter Update element which can include an element ID, a length, an element ID extension, as well as operation parameters control and info fields. Furthermore, this operations parameters control field can include 10 bits used to indicate whether five different modes (NPCA, DSO, DBE, DUO, LOM) are enabled and if the parameters are present. Additionally, the operations parameter info file can include operation information for the five modes.

According to some embodiments, each "Enabled" field can indicate whether the corresponding feature is enabled or not. Furthermore, each "Present" field set to a value of 1 can indicate that the corresponding Op Info field is present in the Operation Info field. Alternatively, Each "Present" field set to a value of 0 can indicate that the corresponding Op Info field is not present in the Operation Info field. Accordingly, the Present bit can only be set to a value of 1 if its corresponding "Enabled" field is also set to a value of 1, according to some embodiments.

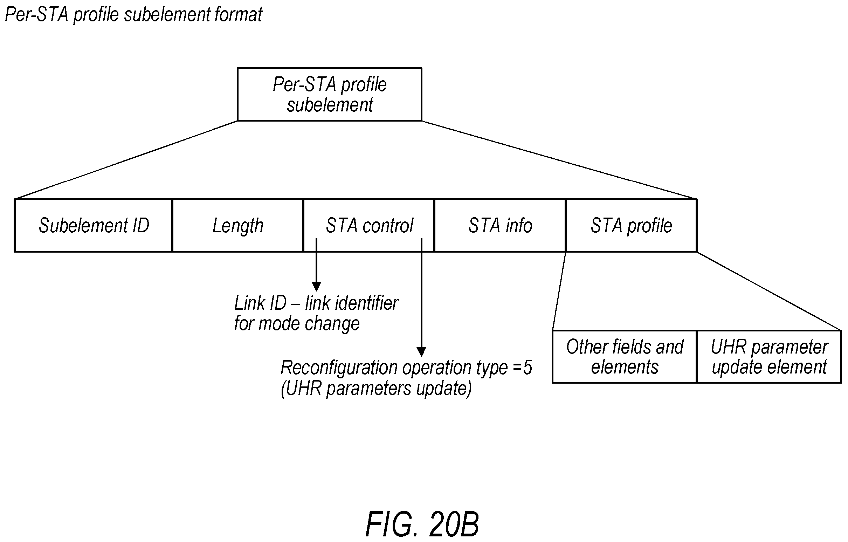

Figure 20B illustrates an example per-STA profile subelement format which can include a subelement ID, a length, as well as STA control, info, and profile fields. Furthermore, the STA control field can include information corresponding to a Link ID for a mode change. Additionally or alternatively, the STA control field can include information associated with a UHR parameters update by setting a reconfiguration operation type to a certain value (e.g., 5 as shown in Figure 20B). Moreover, the STA profile can include information associated with other fields and elements in addition to a UHR parameter update element, according to some embodiments.

In other words, Figures 20A-B illustrate aspects of a method of indicating a mode that a STA intends to enable or disable with an indication of a presence of operation parameters for that mode. For example and with regard to a current link, an ordered bitmap can be used to indicate a particular mode that a STA intends to enable or disable, according to some embodiments.

Additionally and with respect to cross-link signaling, a Reconfiguration ML element can be used for mode change signaling. One benefit of this can be realized as a capability of changing multiple modes for a specific link. However, in some aspects the design can be constrained to enablement or disablement of multiple modes. For example and with regard to single mode change signaling, an Operation Parameters Control field may need to include information of all existing modes in the appropriate 802.11 release (e.g., 802.11bn), according to some embodiments.

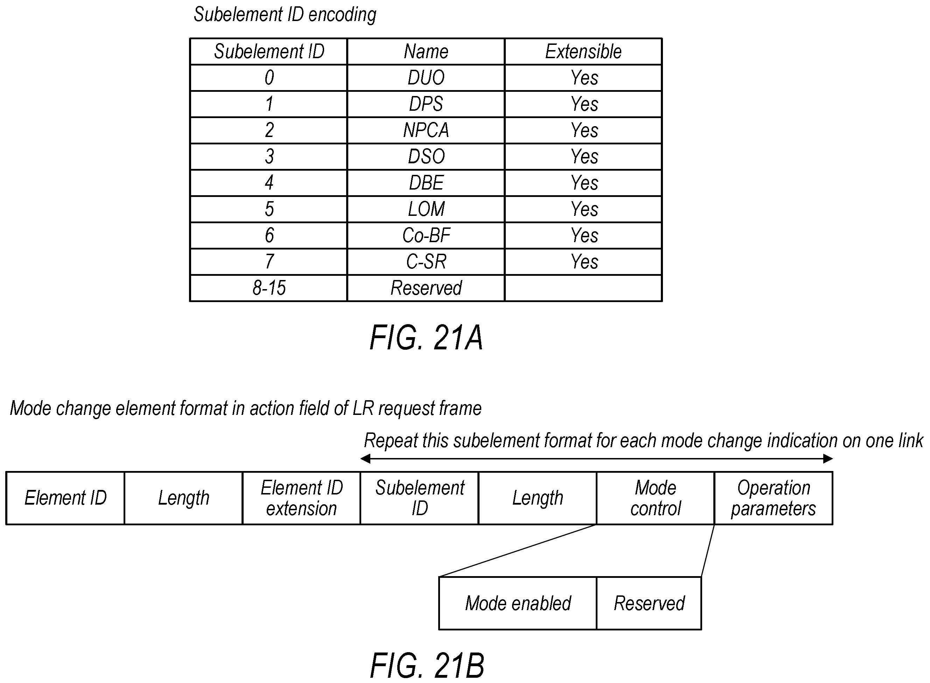

### Figures 21A-B - UHR Mode Change Element in LR Request Frame

Figures 21A-B illustrate example fields and formats of LR request frame used for a UHR mode change, according to some embodiments. For example, Figures 21A illustrate example aspects of a new subelement ID encoding including respective identifiers, names, and whether they are extensible. For example, subelement IDs 0 through 7 can be respectively associated with UHR modes (e.g., DUO, DPS, NPCA, DSO, DBE, LOM, Co-BF, and C-SR) and all be extensible. Additionally, subelement IDs 8-15 can be reserved, according to some embodiments.

As shown in Figure 21B, a mode change element format in an action field of the LR request frame can be characterized by a format including an element ID, length, element ID extension, subelement ID, length, mode control, and operation parameters fields. Furthermore, the mode control field can include a mode enabled subfield and a reserved subfield, according to some embodiments.

In other words, Figures 21A-B are directed toward a method for enablement or disablement of different UHR modes through utilization of a subelement framework via a mode change element in an action field of a LR Request frame, according to some embodiments. Accordingly, the Subelement ID field can indicate a mode that a STA intends to change to and the Mode Control field can indicate if a mode is requested to be enabled or disabled. Furthermore, the Operation Parameters field can indicate the parameters that a STA uses when a mode has completed the enablement procedure as well as the operation parameters that are present for specific subelements, according to some embodiments.

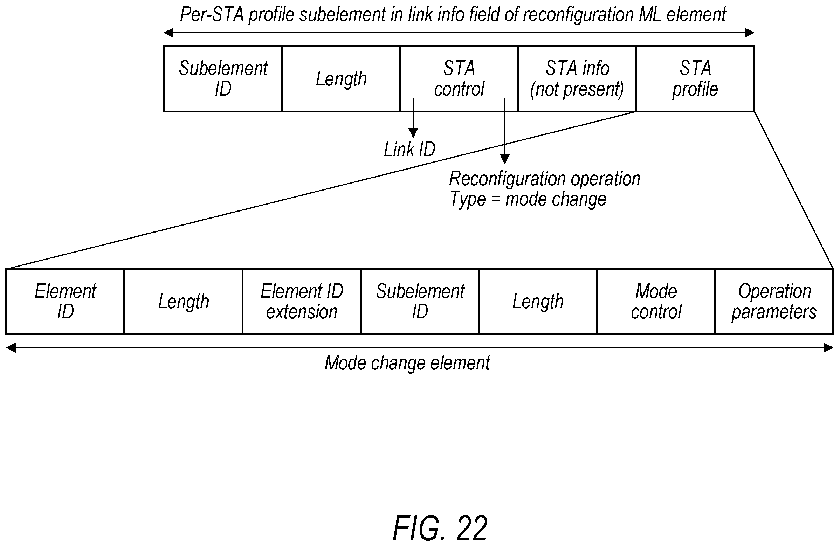

### Figure 22 - Per-STA Profile subelement in Link Info field of Reconfiguration ML element

Figure 22 illustrates example fields and formats of a Per-STA Profile subelement in Link Info field of Reconfiguration ML element, according to some embodiments. For example, the Per-STA Profile subelement of Figure 22 can include a subelement ID, length, STA control, STA profile fields. Additionally, the STA Info field may not be present in these subelements, according to some embodiments. Furthermore, the STA control field can include information associated with a Link ID and a Reconfiguration operation type set to "Mode Change", according to some embodiments. Additionally, the STA profile field can include subfields such as element ID, length, element ID extension, subelement ID, length, mode control, and operation parameters.

In some embodiments, such as when cross-link signaling is needed, the Mode Change element can be included in the Reconfiguration ML element. Accordingly, the Link ID subfield in the STA Control field of Per-STA Profile subelement can be included in the Link Info field as link identifier for the intended mode change. Furthermore, the Mode Change element can be included in STA Profile field of Per-STA Profile subelement Additionally, if the Reconfiguration Operation Type subfield in the STA Control field is set to "Mode Change" the STA Info field may not be present in the Per-STA Profile subelement, according to some embodiments.

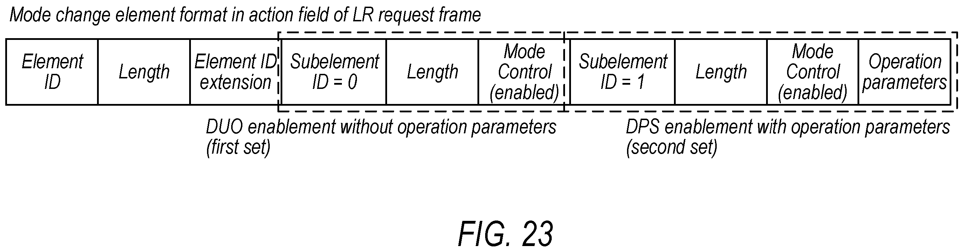

### Figure 23 - Mode Change Element without Link ID/Bitmap

Figure 23 illustrates example fields and a format of a Mode Change Element without Link ID/Bitmap, according to some embodiments. For example, a non-AP MLD that intends to enable DPS and DUO in an operating link can use a Mode Change element such as the one illustrated in Figure 23.

In some embodiments, the mode change element can include fields such as an element ID, a length, and an element ID extension. Additionally the mode change element can include two sets of subelement IDs and corresponding length and mode control fields. Accordingly, with the subelement IDs set to 0 and 1 for the first and second sets and both mode control fields set to enabled, DUO and DPS can be enabled for the non-AP MLD, according to some embodiments. Furthermore, the second set can additionally include an operations parameters field associated with the DPS mode. In contrast, the first set may not include an operations parameters field because the DUO mode may not require it, according to some embodiments.

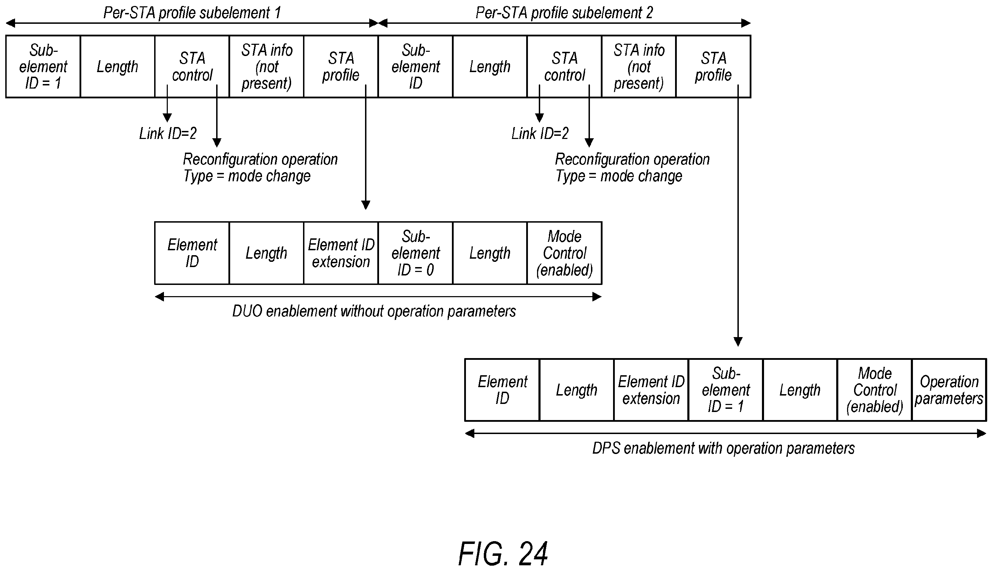

### Figure 24 - Mode Change Element in a Reconfiguration ML element

Figure 24 illustrates example fields and a format of a mode change element in a reconfiguration ML element, according to some embodiments. For example, the reconfiguration ML element can include two Per-STA Profile Subelements 1 and 2 each including a subelement ID, length, STA control, STA profile fields. Additionally, the STA Info field may not be present in these subelements, according to some embodiments. Furthermore, the STA control field can include information associated with a Link ID (e.g., Link ID =1 for subelement 1 and Link ID = 2 for subelement 2) and a Reconfiguration operation type set to "Mode Change", according to some embodiments. Additionally, the STA profile field for subelement 1 can include subfields such as element ID, length, element ID extension, a subelement ID set to a value of 0, length, and a mode control field set to enabled. Accordingly, as the subelement ID is set to a value of 0 (e.g., corresponding to DUO mode enablement), the operations parameters field may not be present in the STA profile for subelement 1. Alternatively, the STA profile field for subelement 2 can include subfields such as element ID, length, element ID extension, a subelement ID set to a value of 1, length, and a mode control field set to enabled. Accordingly, as the subelement ID is set to a value of 1 (e.g., corresponding to DPS mode enablement), the operations parameters field can be present or included in the STA profile for subelement 2, according to some embodiments. In other words, Figure 24 illustrates how a non-AP MLD can use a mode change element to enable DPS in link with Link ID = 1 and DUO in link with Link ID = 2, according to some embodiments.

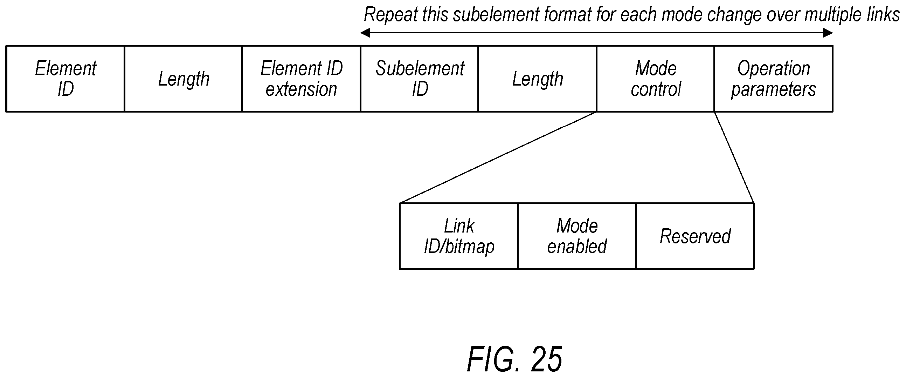

### Figure 25 - Mode Change Element in a LR Request Frame

Figure 25 illustrates example fields and a format of a mode change element in a LR request frame, according to some embodiments. For example, the mode change element format can include fields such as an element ID, length, and element ID extension. Additionally the format can include a set of fields such as subelement ID, length, mode control, and operation parameters in which the set of these fields are repeated for each mode change over multiple links, according to some embodiments. Furthermore, the Mode Control field can include subfields including Link ID/Bitmap, Mode Enabled, and Reserved.

In some embodiments, this mode change element with the subelement framework for different modes (e.g., DPS, DUO, NPCA, DSO, DBE, LOM, Co-BF, C-SR) illustrated in Figure 25 can be utilized for single or cross-link mode change signaling. For example, the Subelement ID field can indicate a mode that a STA intends to change and the Mode Control field can indicate a Link ID or Bitmap (used for DUO) subfield to further indicate the intended link the mode is requested to be enabled, according to some embodiments. Furthermore, the Mode Enabled subfield can be used to indicate if a mode is requested to be enabled or disabled. Moreover, the Operation Parameters field can indicate the parameters that a STA operates when a mode has completed an enablement procedure. Accordingly, there can be operation parameters for specific subelements and no signaling may be needed in the Reconfiguration ML element, according to some embodiments.

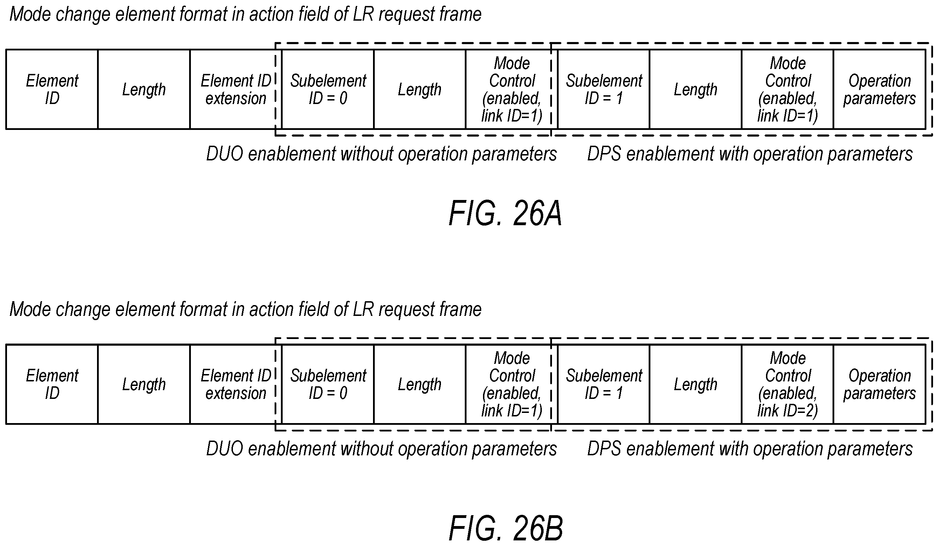

### Figures 26A-B - Mode Change Element With Link ID/Bitmap

Figures 26A-B illustrate example fields and formats of a mode change element with a corresponding link ID or bitmap, according to some embodiments. For example, Figure 26A illustrates an example mode change element format in an action field of a LR request frame which can include fields such as element ID, length, element ID extension as well as two sets of fields for DUO and DPS enablement, according to some embodiments. The first set of fields can correspond to DUO enablement and include fields such as subelement ID set to a value of zero, a length, and a Mode Control field set to enabled and with a Link ID set to a value of 1. Additionally, the second set of fields can correspond to DPS enablement and include fields such as subelement ID set to a value of one, a length, a Mode Control field set to enabled and with a Link ID set to a value of 1, and an Operations parameters field. In other words, Figure 26A illustrates how a non-AP MLD can use a mode change element to enable DPS and DUO in Link 1, according to some embodiments.

Figure 26B illustrates an example mode change element format in an action field of a LR request frame which can include fields such as element ID, length, element ID extension as well as two sets of fields for DUO and DPS enablement, according to some embodiments. The first set of fields can correspond to DUO enablement and include fields such as subelement ID set to a value of zero, a length, and a Mode Control field set to enabled and with a Link ID set to a value of 1. Additionally, the second set of fields can correspond to DPS enablement and include fields such as subelement ID set to a value of one, a length, a Mode Control field set to enabled and with a Link ID set to a value of 2, and an Operations parameters field. In other words, Figure 26B illustrates how a non-AP MLD can use a mode change element to enable DUO in a link with Link ID = 1 and DPS in a link with Link ID = 2, according to some embodiments. In some embodiments, the mode change element can be considered as a standalone container for UHR mode change as there is no use of a ML Reconfiguration ML element.

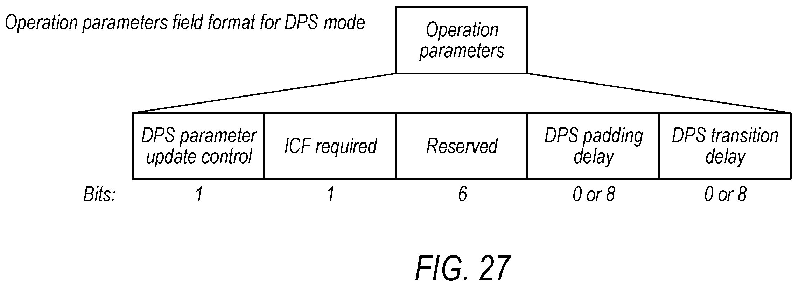

### Figure 27 - Operation Parameters Subfield Format for subelement ID subfield value = 1

Figure 27 illustrates example subfields and a format of an operation parameters field for a DPS mode, according to some embodiments. For example, Figure 27 illustrates an example operation parameters subfield format for subelement ID subfield value = 1 (e.g., DPS mode), according to some embodiments. Accordingly, if the subelement ID subfield value = 1, the Operation Parameters subfield in STA Info field can include a 1 bit DPS Parameter Update Control subfield which can indicate whether an updated DPS padding delay and DPS Transition Delay values are present with respect to transmitted value in a last transmitted UHR Mode Enablement Notification frame. Furthermore, if this subfield is set to 1, the DPS Padding Delay and DPS Transition Delay subfields can be present in the subfield format illustrated in Figure 27. Additionally, if this subfield is set to 1 with a non-zero value in the DPS Padding Delay subfield, this can indicate that a STA that has enabled DPS mode requires an intermediate FCS (I-FCS) in an ICF, according to some embodiments.

The Operations Parameters subfield format can also include a 1 bit ICF Required subfield which can indicate whether the STA needs an ICF and ICR exchange prior to any frame exchange initiated with a DPS STA. For example, the ICF Required subfield can be set to 0 if an ICF and/or ICR is required only for frame exchanges that use HCM parameters. Alternatively, the ICF Required subfield can be set to 1 if an ICF and/or ICR is required for all frame exchanges. Additionally or alternatively, the 1 bit ICF Required subfield can be used to indicate for a DPS STA to transition from a low capability mode (LCM) to a high capability mode (HCM).

In some embodiments, the Operation Parameters field of the Mode Change element may include a 6 bit reserved subfield. Additionally, the 6 bits of the reserved subfield may be used to indicate if a STA intends to operate in a parameterized mode, according to some embodiments. For example, if an appropriate value in the 6 bit reserved subfield equals zero, this may indicate that the STA intends to operate in default mode (e.g., 20 MHz, Nₛₛ=1, MCS ≤ 4), according to some embodiments. Alternatively, if the appropriate value in this field is equal to one, this may indicate that the STA intends to operate in a parameterized mode. Accordingly, the STA can define the parameters for this mode in the Operation Parameters field of the Mode Change element.

In some embodiments, the DPS Padding Delay subfield can indicate an updated value of a DPS padding delay ranging from 0-64 (in resolution/increments of 4 microseconds (µs)). Additionally, the DPS Transition Delay subfield can indicate an updated value of a DPS transition delay ranging from 0-64 (in resolution/increments of 4 microseconds (µs)).

According to some embodiments, when the Mode Type subfield value is set to a value of 0 (e.g., indicating DUO mode) in the STA Control field, the Operation Parameters Present subfield can be set to 0 and feedback information can be provided in a Multi-STA block acknowledgement (BA) as an ICR frame. Additionally, when the Mode Type subfield value is set to a value of 0 (e.g., indicating DUO mode), the STA Info field may not be present in the Mode Enablement Profile subelement, according to some embodiments.

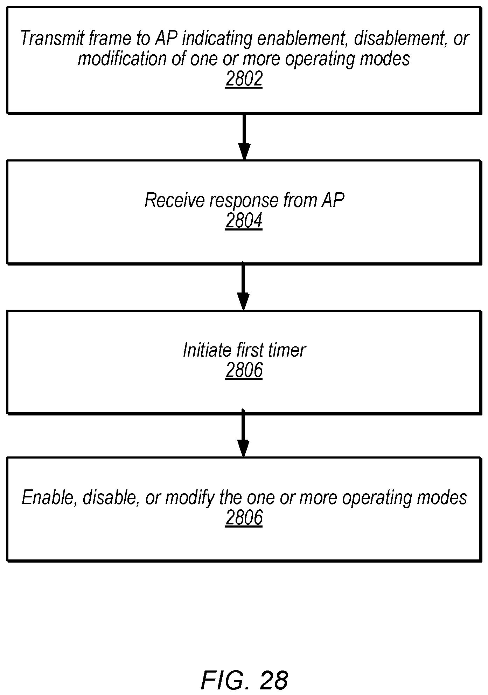

### Figure 28 - Feature Enablement/Update/Disablement Methods

Figure 28 is a communication flow diagram illustrating aspects of an enhanced method of mode management techniques including feature Enablement/Update/Disablement, according to some embodiments. Such techniques can aid in providing more efficient and flexible mode management procedures (as compared to legacy methods) and subsequently reduce power consumption among AP MLD and non-AP MLDs.

For example, Figure 28 illustrates an example enhanced method of mode management techniques performed by a non-AP MLD, according to some embodiments. Aspects of the method of Figure 28 can be implemented by a non-AP MLD in communication with an AP MLD. The AP MLD and/or non-AP MLD can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP, and/or AP, or other device to perform such method elements.

Note that while at least some elements of the method of Figure 28are described in a manner relating to the use of communication techniques and/or features associated with IEEE and/or 802.11 (e.g., 802.11be) specification documents, such description is not intended to be limiting to the disclosure, and aspects of the method of Figure 28can be used in any suitable wireless communication system, as desired. Similarly, while elements of the method of Figure 28 are described in a manner relating to non-APs that can be MLDs or UHR MLDs, such description is not intended to be limiting to the disclosure, and aspects of the method of Figure 28 can be used by non-APs that are not MLDs or UHR MLDs, as desired. Additionally, while some aspects of the method of Figure 28can be implemented by a non-AP MLD, some corresponding steps related to the method of Figure 28 can be performed by an AP MLD in which the non-AP MLD is communicating with.

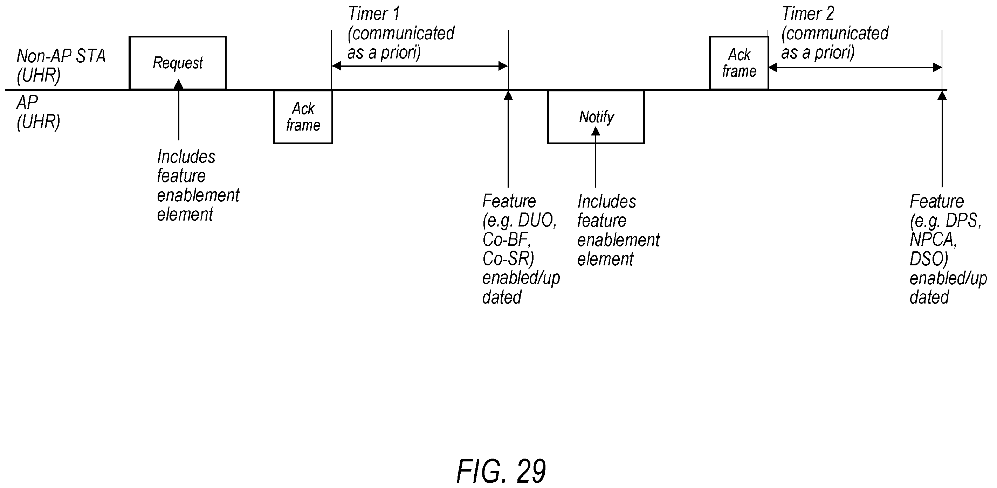

The methods shown can be used in conjunction with any of the systems, methods, or devices shown in the Figures (such as Figures 29-36, for example), among other devices. In various embodiments, some of the method elements shown can be performed concurrently, in a different order than shown, or can be omitted. Additional method elements can also be performed as desired. As shown, this method can operate as follows.

At 2802, the non-AP STA can transmit a frame to an AP indicating enablement, disablement, or modification of one or more operating modes, according to some embodiments. For example, the non-AP STA can transmit, to the AP, a frame comprising at least one indicator indicating enablement, disablement, or modification of one or more operating modes respectively associated with one or more wireless links. In some embodiments, the at least one indicator can include a feature enablement element.

At 2804, the non-AP STA can receive a response from the AP, according to some embodiments. For example, the response from the AP can be an acknowledgement (ACK) frame, according to some embodiments.

At 2806, the non-AP STA can initiate a first timer, according to some embodiments. For example, the first timer can be initiated upon reception of the ACK frame, according to some embodiments.

At 2808, the non-AP STA can enable, disable, or modify the one or more operating modes, according to some embodiments. For example, the non-AP STA can, based at least in part on the at least one indicator, reception of the response, and expiry of the first timer, enable, disable, or modify the one or more operating modes respectively associated with one or more wireless links.

According to some embodiments, the method can further include receiving, from the AP, a notification frame comprising another feature enablement element and transmit, to the AP, an acknowledgement (ACK) frame. Additionally or alternatively, enablement, disablement, or modification of the one or more operating modes respectively associated with the one or more wireless links can be performed upon expiry of a second timer which starts after reception of the ACK frame.

### Figure 29 - Enablement Process Using a Feature Enablement Element

Figure 29 illustrates an enablement process using a feature enablement element, according to some embodiments. For example, Figure 29 illustrates an example communication exchange between a UHR AP and a UHR non-AP STA to perform said enablement process. In some embodiments, the UHR non-AP STA can transmit, to the UHR AP, a request frame which can include a feature enablement element. The UHR AP can then transmit, to the UHR non-AP STA, an ACK frame. Additionally and after a first timer (communicated as a priori) has expired, the feature corresponding to a mode (e.g., DUO, Co-BF, Co-SR, etc.) can be enabled or updated.

Additionally or alternatively, the UHR AP can transmit, to the UHR non-AP STA, a notify frame which can include the feature enablement element, according to some embodiments. The UHR non-AP STA can then transmit, to the UHR AP, an ACK frame and, after a second timer (also communicated as a priori) has expired, the feature corresponding to a mode (e.g., DUO, Co-BF, Co-SR, etc.) can be enabled or updated, according to some embodiments.

In other words, Figure 29 is directed toward a common feature enablement element which can be used to enable/update all 802.11 mode (e.g., 802.11bn mode) features including DUO, DPS, NPCA, DSO , Co-BF, Co-SR, as well as other new features. For example, upon receiving a STA's feature enablement or update request, some features (e.g., DUO) can be enabled or updated after a duration of a first timer (e.g., Timer 1) after the reception of an ACK frame to the enablement/update request frame. In some embodiments, the first timer can be a zero or a non-zero value communicated as a priori. At least in some instances, these a priori communications may be based at least in part on previous knowledge, assumptions, hypotheses, and/or analyses.

Additionally or alternatively and upon receiving a STA's feature enablement/update request of some mode features (e.g., DPS, NPCA and DSO), an AP can transmit an enablement/update notify frame, and the feature is enabled/updated after a duration of a second timer (e.g., Timer 2) after the reception of the ACK frame to the Enablement/Update Notify frame. In some embodiments, the second timer can be a zero or a non-zero value communicated as a priori.

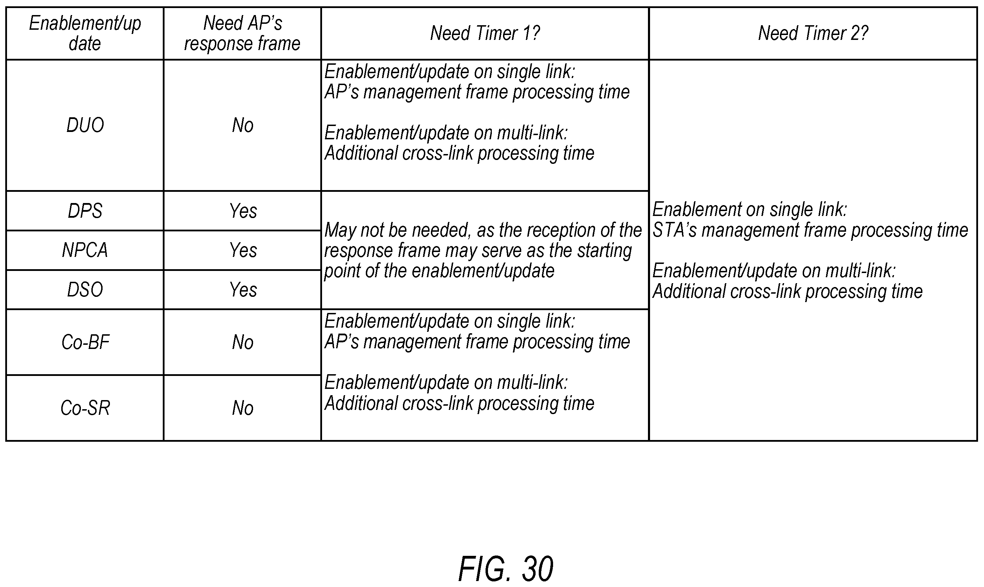

### Figure 30 - Modal Conditions for Feature Enablement/Updates

Figure 30 illustrates example modal conditions for feature enablement or update, according to some embodiments. For example and as shown in Figure 30, enablement or update of a DUO mode may not require a response frame from the AP and the first timer (e.g., Timer 1) and/or its corresponding timer value can be based at least in part on the AP's management frame processing time for a single link enablement/update and additional cross-link processing time for ML enablement/update, according to some embodiments.

With regard to DPS, NPCA, and DSO modes, an AP response frame can be needed and the first timer (e.g., Timer 1) may not be needed since the reception of the response frame can serve as the starting point of the enablement/update, according to some embodiments.

With regard to Co-BF and Co-SR modes, an AP response frame may not be needed and the first timer (e.g., Timer 1) and/or its corresponding timer value can be based at least in part on the AP's management frame processing time for a single link enablement/update and additional cross-link processing time for ML enablement/update, according to some embodiments.

Furthermore and corresponding to all the modes shown in Figure 30, the second timer (e.g., Timer 2) and/or its corresponding timer value can be based on a STA's management frame processing time for single link enablement/update and additional cross-link processing time for ML link enablement/update, according to some embodiments.

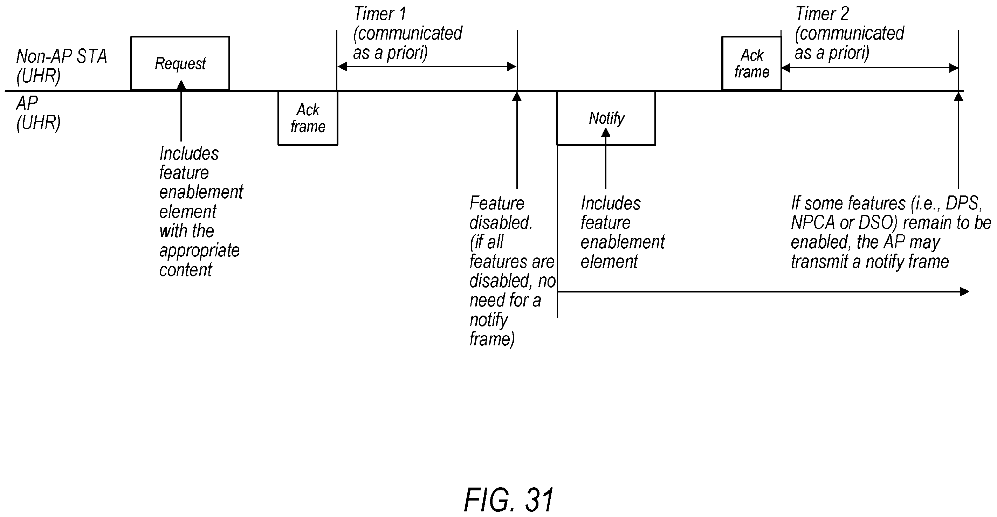

### Figure 31 - Disablement Process Using a Feature Enablement Element

Figure 31 illustrates a disablement process using a feature enablement element, according to some embodiments. For example, Figure 31 illustrates an example communication exchange between a UHR AP and a UHR non-AP STA to perform said disablement process. In some embodiments, the UHR non-AP STA can transmit, to the UHR AP, a request frame which can include a feature enablement element with appropriate disablement content. The UHR AP can then transmit, to the UHR non-AP STA, an ACK frame. Additionally and after a first timer (communicated as a priori) has expired, the feature can be disabled. According to some embodiments, if all features are disabled, it may not be necessary for the UHR AP to transmit a notify frame to the UHR non-AP STA.

However, if all features have not been disabled (e.g., if some features corresponding to DPS, NPCA or DSO (among other possible modes) remain to be enabled), the UHR AP can transmit, to the UHR non-AP STA, a notify frame which can include the feature enablement element, according to some embodiments. The UHR non-AP STA can then transmit, to the UHR AP, an ACK frame and, after a second timer (also communicated as a priori) has expired, the feature can be disabled, according to some embodiments.

In other words, Figure 31 is directed toward a method of feature disablement via a feature enablement element, according to some embodiments. For example, a STA can transmit a frame to request to update or disable one or more features using a similar process to that of the enablement process of Figure 29. This request frame can contain the enablement element with the corresponding bit(s) in a Feature Bit map/presence field of the element set to 0, and the subelement(s) of the corresponding feature(s) may not be included, according to some embodiments. Furthermore, as long as a feature is enabled on one (or more) link(s), the bit corresponding to the feature in the Feature Bit map/presence field of the enablement element can be set to 1, and the corresponding subelement for the feature can therefore be included in the element, according to some embodiments.

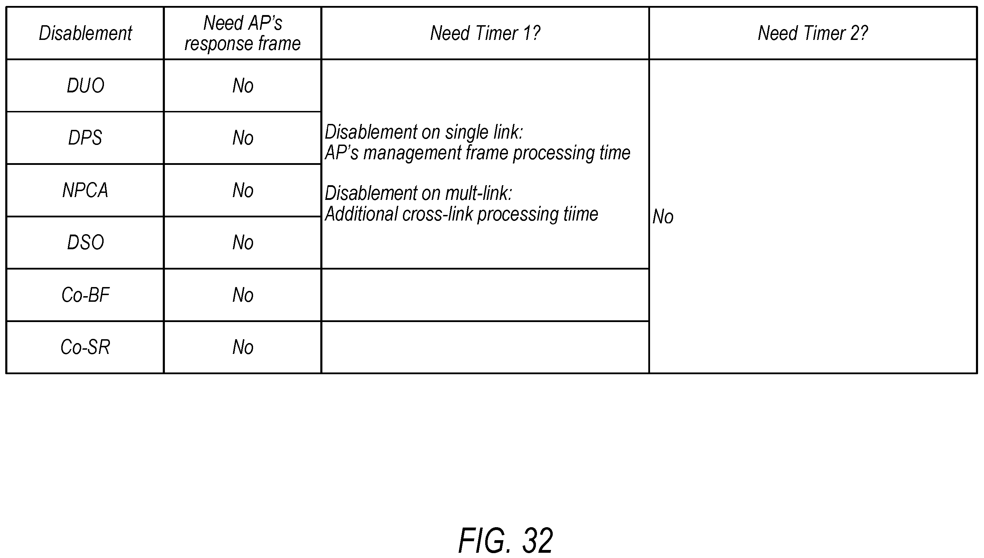

### Figure 32 - Modal Conditions for Feature Disablement

Figure 32 illustrates example modal conditions for feature disablement, according to some embodiments. For example and as shown in Figure 32, disabling of DUO, DPS, NPCA, DSO modes may not require a response frame from the AP and the first timer (e.g., Timer 1) and/or its corresponding timer value can be based at least in part on the AP's management frame processing time for a single link enablement/update and additional cross-link processing time for ML enablement/update, according to some embodiments. Furthermore and with regard to disabling of Co-BF and Co-SR modes, an AP response frame can also not be needed. Furthermore and corresponding to all the modes shown in Figure 30, the second timer (e.g., Timer 2) and/or its corresponding timer value may not be needed, according to some embodiments.

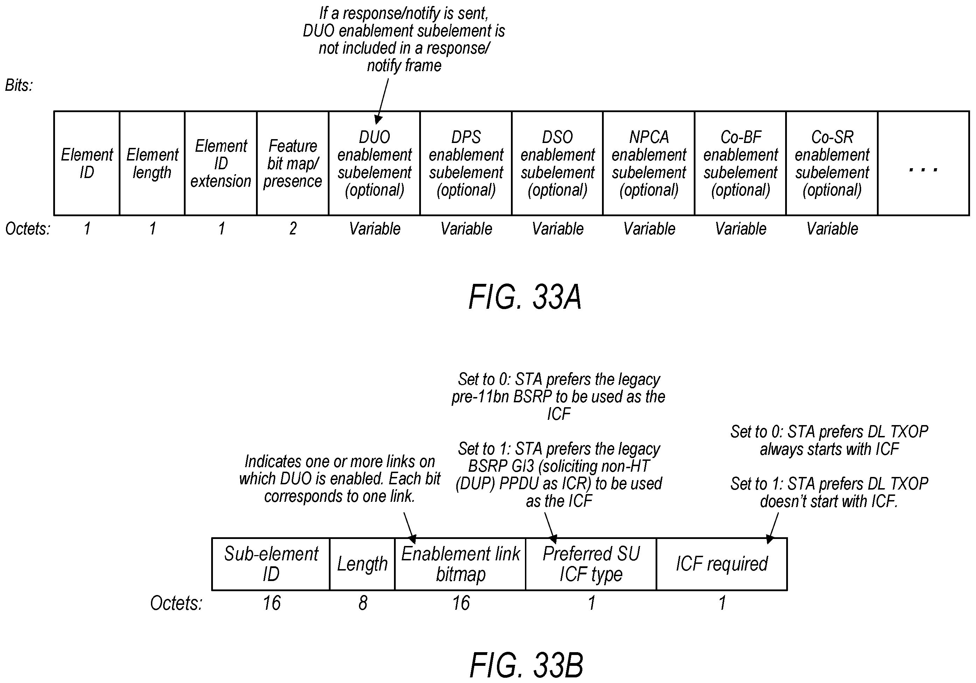

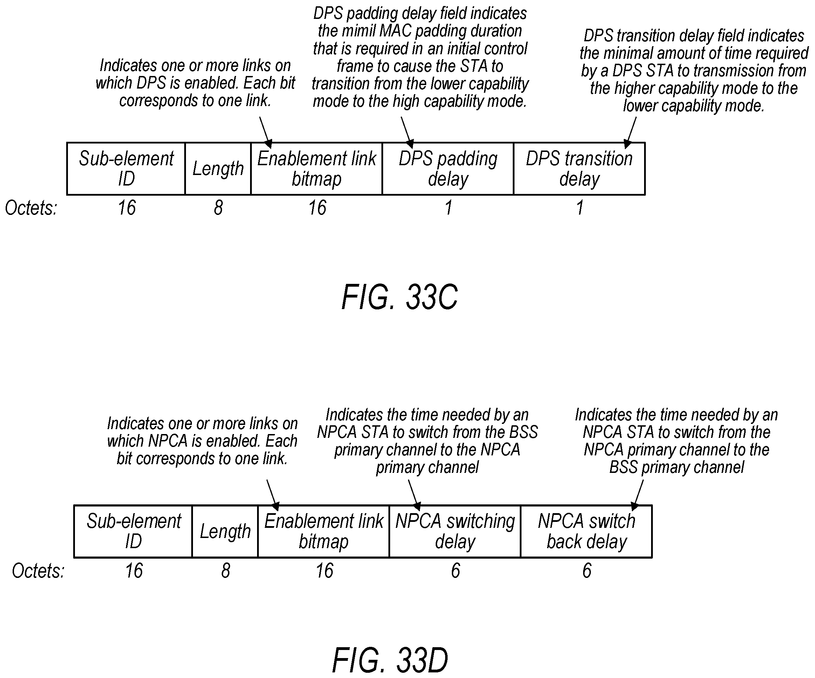

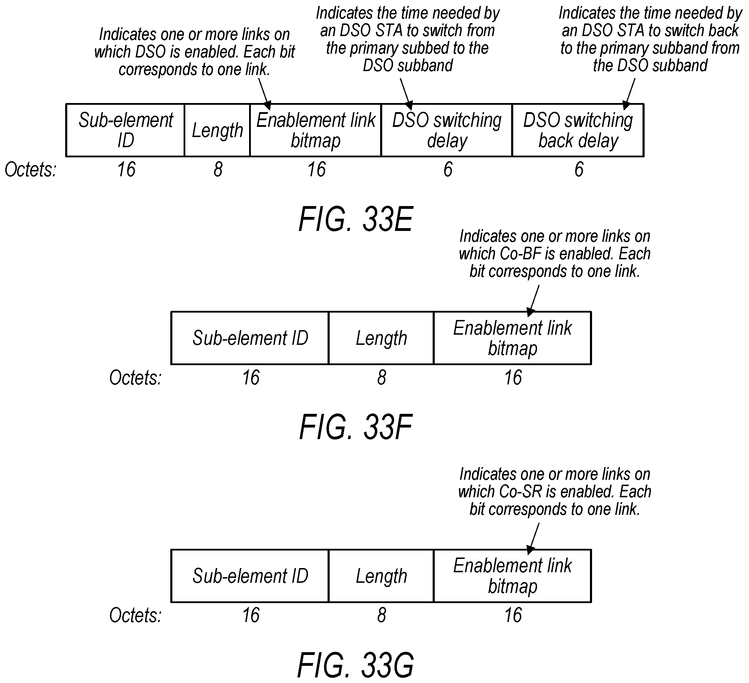

### Figures 33A-G - Feature Enablement Element Designs - Option 1

Figures 33A-G illustrate example aspects of fields and formats related to a first option of feature enablement element designs, according to some embodiments. For example, Figure 33A illustrates a first option of a feature enablement element which can include 1 octet element ID, element length, and element ID extension fields, a 2 octet Feature Bitmap/Presence field, as well as variable octet length optional enablement subelement fields for each mode including DUO, DPS, DSO, NPCA, Co-BF, and Co-SR (among other possible modes), according to some embodiments. Furthermore, if a response/notify frame is sent corresponding to enablement of the DUO mode, the DUO enablement subelement may not be included in a response/notify frame, according to some embodiments.

According to Figure 33A, each feature has one fixed corresponding bit position. The bit can be set to 1 for enablement on one or more links and can be set to 0 for disablement on all links. Accordingly, when a respective bit is set to 1, the subelement for the corresponding feature can be included in the element if it's the first time the feature is enabled or the content of the subelement is changed/updated, according to some embodiments. Alternatively, when the bit is set to 0, the subelement for the corresponding feature may not be included in the element, according to some embodiments.

Figures 33B-G illustrate example fields and formats of DUO, DPS, NPCA, DSO, Co-BF, and Co-SR enablement subelements, according to some embodiments. For example and as illustrated in Figures 33B-G, the formats can include a 16 bit subelement ID field, an 8 bit length field and a 16 bit enablement bitmap field. Furthermore and as each different bit of the 16 bit enablement bitmap can correspond to a different link, the 16 bit enablement bitmap field can be used to indicate one or more links on which the appropriate mode is enabled.

Figures 33B-G also illustrate additional fields which can be included the DUO, DPS, NPCA, DSO, Co-BF, and Co-SR enablement subelements, according to some embodiments. For example, a DUO enablement subelement can additionally include Preferred SU ICF Type and ICF Required fields, a DPS enablement subelement can additionally include DPS padding delay and DPS transition delay fields, a NPCA enablement subelement can additionally include NPCA switching delay and NPCA switch back delay fields, a DSO enablement subelement can additionally include DSO switching delay and DSO switching back delay fields, according to some embodiments.

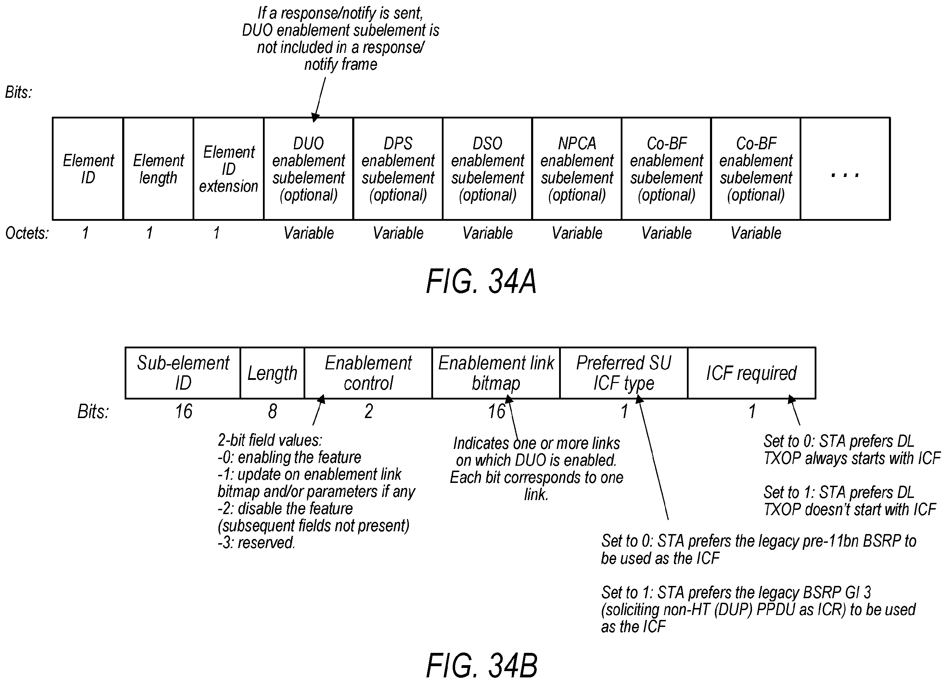

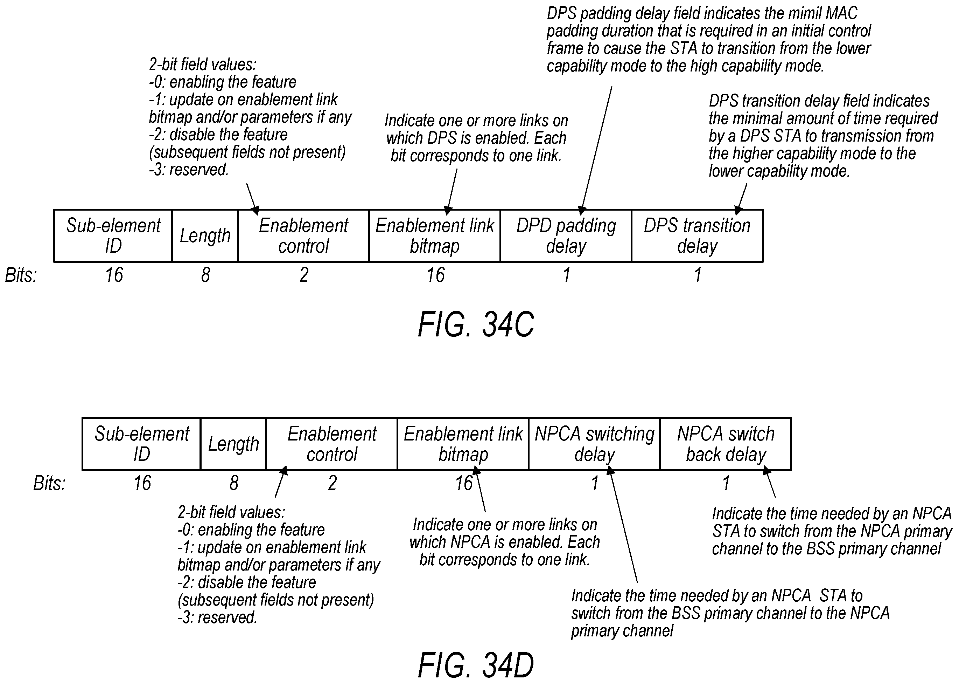

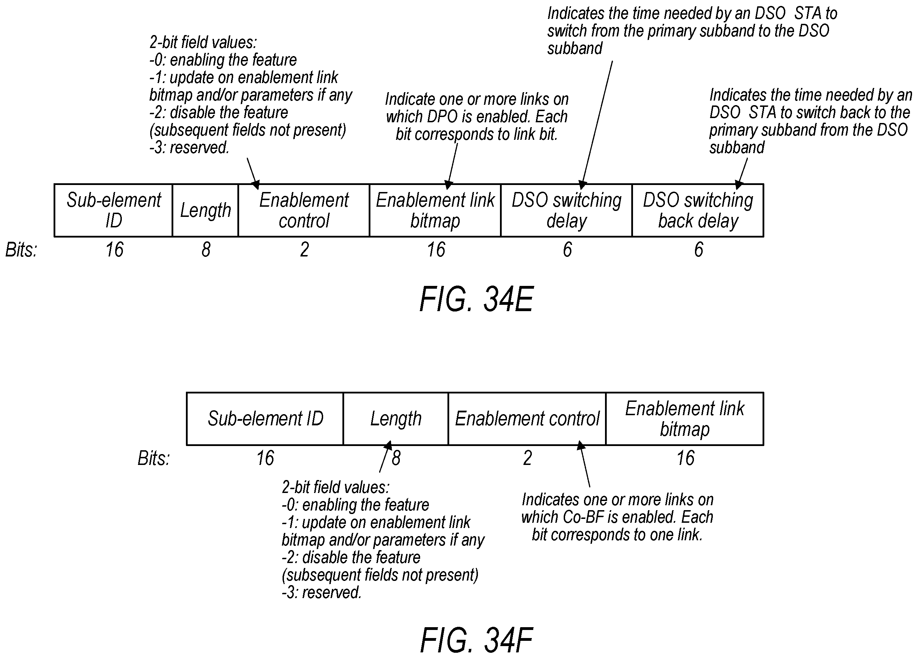

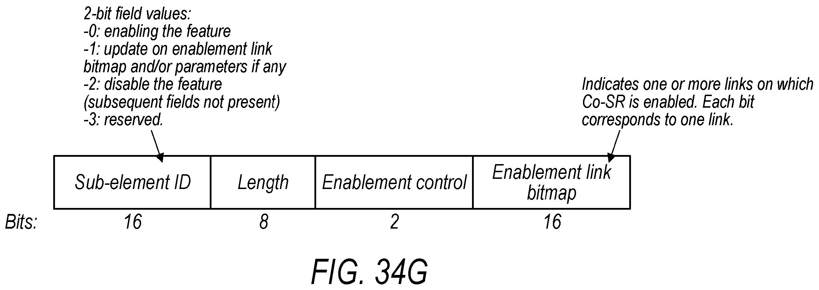

### Figures 34A-G - Feature Enablement Element Designs - Option 2

Figures 34A-G illustrate example aspects of fields and formats related to a second option of feature enablement element designs, according to some embodiments. For example, Figure 34A illustrates a second option of a feature enablement element which can include 1 octet element ID, element length, and element ID extension fields, as well as variable octet length optional enablement subelement fields for each mode including DUO, DPS, DSO, NPCA, Co-BF, and Co-SR (among other possible modes), according to some embodiments. Furthermore, if a response/notify frame is sent corresponding to enablement of the DUO mode, the DUO enablement subelement may not be included in a response/notify frame, according to some embodiments.

Figures 34B-G illustrate example fields and formats of DUO, DPS, NPCA, DSO, Co-BF, and Co-SR enablement subelements, according to some embodiments. For example and as illustrated in Figures 34B-G, the formats can include a 16 bit subelement ID field, an 8 bit length field, a 16 bit enablement bitmap, and a 2 bit enablement control field. Each different bit of the 16 bit enablement bitmap can correspond to a different link and therefore the 16 bit enablement bitmap field can be used to indicate one or more links on which the appropriate mode is enabled.

Additionally, the 2 bit enablement control field included in the DUO, DPS, NPCA, DSO, Co-BF, and Co-SR enablement subelements can include 2-bit field values associated with enabling the feature (e.g., bit values (0,0)), updating of enablement link bitmap and/or parameters if any (e.g., bit values (0,1))., disabling the feature (subsequent fields not present) (e.g., bit values (1,0)), and a reserved value (e.g., bit values (1,1)), according to some embodiments. Accordingly, with both the 16 bit enablement bitmap field and the 2 bit enablement control field, the enablement subelements illustrated in Figures 34B-G can allow for indications of one or more links with regard to mode enablement, disablement, or updates, according to some embodiments.

Figures 34B-G also illustrate additional fields which can be included the DUO, DPS, NPCA, DSO, Co-BF, and Co-SR enablement subelements, according to some embodiments. For example, a DUO enablement subelement can additionally include Preferred SU ICF Type and ICF Required fields, a DPS enablement subelement can additionally include DPS padding delay and DPS transition delay fields, a NPCA enablement subelement can additionally include NPCA switching delay and NPCA switch back delay fields, a DSO enablement subelement can additionally include DSO switching delay and DSO switching back delay fields, according to some embodiments.

Furthermore, the feature enablement element can be included in an association request (and/or response) frame, a link reconfiguration request (and/or notify) frame, any other management action frame(s), or any other container (e.g., frame container), according to some embodiments.

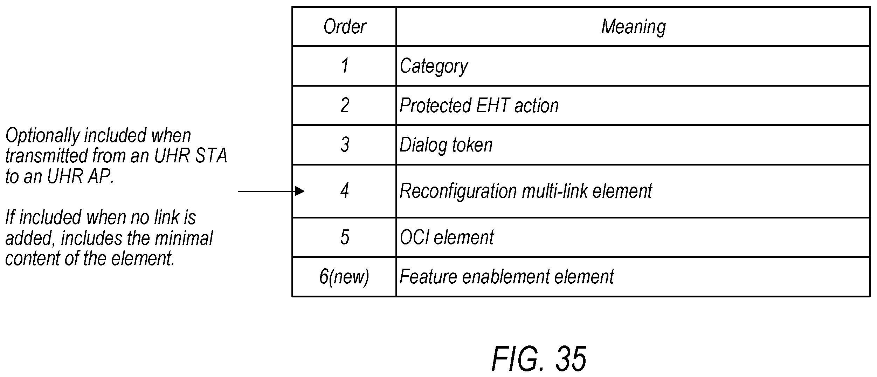

### Figure 35 - Inclusion of Feature Enablement Element in Link Reconfiguration Request Frame

Figure 35 illustrates an example of inclusion of a feature enablement element in a link reconfiguration request frame, according to some embodiments. For example, Figure 35 illustrates a link reconfiguration response frame action field format including orders 1-6 and their associated meanings. Accordingly, a first order can be associated with a Category, a second order can be associated with a Protected EHT Action, a third order can be associated with a Dialog Token, a fourth order can be associated with a Reconfiguration ML element, a fifth order can be associated with an OCI element, and a new sixth order can be associated with the feature enablement element, according to some embodiments.

In some embodiments, the reconfiguration ML element can be optionally included when transmitted from an UHR STA to an UHR AP. Additionally, if the reconfiguration ML element is included when no link is added, the reconfiguration ML element can include the minimal content of the element, according to some embodiments.

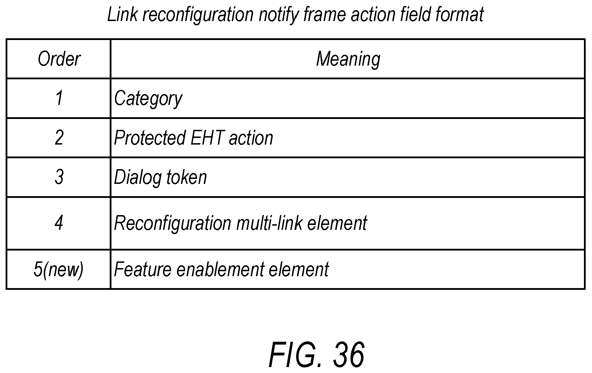

### Figure 36 - Inclusion of Feature Enablement Element in Link Reconfiguration Notify Frame

Figure 36 illustrates an example of inclusion of a feature enablement element in a link reconfiguration notify frame, according to some embodiments. For example, Figure 36 illustrates a link reconfiguration notify frame action field format including orders 1-5 and their associated meanings. Accordingly, a first order can be associated with a Category, a second order can be associated with a Protected EHT Action, a third order can be associated with a Dialog Token, a fourth order can be associated with a Reconfiguration ML element, and a new fifth order can be associated with the feature enablement element, according to some embodiments.

### Example Embodiments

In some embodiments, a method can include transmitting, to an access point (AP), a frame comprising an operating mode indicator indicating enablement, disablement, or modification of an operating mode associated with a wireless link. The method can also include receiving a response from the AP and, based at least in part on the operating mode indicator and the response, enabling, disabling, or modifying the operating mode associated with the wireless link.

According to some embodiments, the frame comprises a link reconfiguration request frame. Additionally or alternatively, the operating mode indicator can be included in a mode change element of the link reconfiguration request frame. Furthermore, the operating mode indicator can be included in a mode control field of the mode change element, according to some embodiments. Moreover and according to some embodiments, the mode change element can include at least one of a subelement identifiers (ID) corresponding to the operating mode, a mode control field indicating the enablement, disablement, or modification of the operating mode, or operating parameters associated with the operating mode.

In some embodiments, the operating mode indicator can include asubelement identifiers (ID) corresponding to the operating mode, and the operating mode comprises at least one of a dynamic unavailability operation (DUO) mode, a dynamic power save (DPS) mode, a non-primary channel access (NPCA) mode, a dynamic subband operation (DSO) mode, a coordinated beamforming (Co-BF) mode, a coordinated spatial refuse (Co-SR) mode, a low latency indication (LLI) mode, a dynamic bandwidth expansion (DBE) mode, or a limited operation mode (LOM). Additionally or alternatively, the method can further include using a per-station (per-STA) profile subelement to add or delete the wireless link, wherein the wireless link operates according to the operating mode.

According to other embodiments, an apparatus can include a processor configured to, when executing instructions stored in a memory, cause an access point (AP) multi-link device (MLD) to perform operations including transmitting, to a non-access point (non-AP) station (STA), a frame comprising an operating mode indicator indicating enablement, disablement, or modification of an operating mode associated with a wireless link. Additionally, the operations can include receiving a response from the non-AP STA and, based at least in part on the operating mode indicator and the response, enabling, disabling, or modifying the operating mode associated with the wireless link.

In some embodiments, the operating mode indicator can be included in an ordered bitmap to indicate at least one operating mode of one or more operating modes to enable, disable, or modify. Additionally or alternatively, the operating mode indicator can further indicate the presence of operation parameters for at least one operating mode of one or more operating modes.

According to some embodiments, the operating mode indicator can be included in a reconfiguration multi-link (ML) element. Furthermore, the operating mode indicator can be included in a mode enablement profile subelement corresponding to a subfield of a ML control field of the reconfiguration ML element. Additionally or alternatively, the operating mode indicator can be included in at least one of a station (STA) information field in a per-STA enablement profile subelement of the reconfiguration ML element. In some embodiments, the reconfiguration ML element can include one or more per-station (per-STA) profile subelements each comprising a station (STA) control field, wherein the STA control field comprises link identifier (ID) information and reconfiguration operation type information, and wherein the link ID information and reconfiguration operation type information are usable in enabling, disabling, or modifying the operating mode associated with the wireless link.

According to additional embodiments, a non-access point (non-AP) station (STA) can include a radio and a processor operably coupled to the radio and configured to cause the non-AP STA to transmit, to an access point (AP), a frame comprising an operating mode indicator indicating enablement, disablement, or modification of an operating mode associated with a wireless link. Additionally, the processor can be configured to cause the non-AP STA to receive a response from the AP, and, based at least in part on the operating mode indicator and the response, , enable, disable, or modify the operating mode associated with the wireless link.

In some embodiments, the operating mode indicator can include a feature enablement element. According to some embodiments, the processor may be further configured to cause the non-AP STA to initiate a first timer, wherein enabling, disabling, or modifying the operating mode associated with the wireless link is further based on expiry of the first timer. Additionally or alternatively, the response from the AP can be an acknowledgement (ACK) frame. In some embodiments, the first timer starts after reception of the ACK frame.

According to some embodiments, the processor can be further configured to cause the non-AP STA to receive, from the AP, a notification frame comprising another feature enablement element and transmit, to the AP, an acknowledgement (ACK) frame. Additionally or alternatively, enablement, disablement, or modification of the operating mode associated with the wireless link can be performed upon expiry of a second timer which starts after reception of the ACK frame.

Embodiments of the present disclosure can be realized in any of various forms. For example, some embodiments can be realized as a computer-implemented method, a computer-readable memory medium, or a computer system. Other embodiments can be realized using one or more custom-designed hardware devices such as ASICs. Other embodiments can be realized using one or more programmable hardware elements such as FPGAs.

In some embodiments, a non-transitory computer-readable memory medium can be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device can be configured to include a processor (and/or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device can be realized in any of various forms.

Furthermore, it is well understood that the use of personally identifiable information can follow privacy policies and practices that are generally recognized as meeting or exceeding industry or governmental requirements for maintaining the privacy of users. In particular, personally identifiable information data can be managed and handled so as to minimize risks of unintentional or unauthorized access or use, and the nature of authorized use can be clearly indicated to users.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
transmitting, to an access point (AP), a frame comprising at least one operating mode indicator, wherein the operating mode indicator indicates enablement, disablement, or modification of an operating mode associated with a wireless link;
receiving a response from the AP; and
based at least in part on the operating mode indicator and the response, enabling, disabling, or modifying the operating mode associated with the wireless link.

2. The method of claim 1, wherein the frame comprises a link reconfiguration request frame.

3. The method of claim 2, wherein the operating mode indicator is included in a mode change element of the link reconfiguration request frame.

4. The method of claim 3, wherein the operating mode indicator is included in a mode control field of the mode change element.

5. The method of any of claims 3-4, wherein the mode change element comprises at least one of:
a subelement identifier (ID) corresponding to the operating mode;
a mode control field indicating the enablement, disablement, or modification of the operating mode; or
an operating parameter associated with the operating mode.

6. The method of any of claims 1-5, wherein the operating mode indicator comprises a subelement identifier (ID) corresponding to the operating mode, and wherein the operating mode comprises at least one of:
a dynamic unavailability operation (DUO) mode;
a dynamic power save (DPS) mode;
a non-primary channel access (NPCA) mode;
a dynamic subband operation (DSO) mode;
a coordinated beamforming (Co-BF) mode;
a coordinated spatial refuse (Co-SR) mode;
a low latency indication (LLI) mode;
a dynamic bandwidth expansion (DBE) mode; or
a limited operation mode (LOM).

7. The method of any of claims 1-6, further comprising:
using a per-station (per-STA) profile subelement to add or delete the wireless link, wherein the wireless link operates according to the operating mode.

8. The method of any of claims 1-7, wherein the operating mode indicator is comprised in an ordered bitmap to indicate at least one operating mode of one or more operating modes to enable, disable, or modify.

9. The method of any of claims 1-8, wherein the operating mode indicator further indicates the presence of operation parameters for at least one operating mode of one or more operating modes.

10. The method of any of claims 1-9, wherein the operating mode indicator is comprised in a reconfiguration multi-link (ML) element.

11. The method of claim 10, wherein the operating mode indicator is comprised in a mode enablement profile subelement corresponding to a subfield of a ML control field of the reconfiguration ML element.

12. The method of any of claims 10-11, wherein the operating mode indicator is comprised in a station (STA) information field in a per-STA enablement profile subelement of the reconfiguration ML element.

13. The method of any of claims 10-12, wherein the reconfiguration ML element comprises one or more per-station (per-STA) profile subelements each comprising a station (STA) control field, wherein the STA control field comprises link identifier (ID) information and reconfiguration operation type information, and wherein the link ID information and reconfiguration operation type information are usable in enabling, disabling, or modifying the one or more operating modes respectively associated with the one or more wireless links.

14. An apparatus, comprising:
a processor configured to, when executing instructions stored in a memory, perform operations according to the method of any of claims 1-13.

15. A non-transitory computer readable storage medium storing program instructions executable by one or more processors to cause a non-access point (non-AP) station (STA) to perform operations according to the method of any of claims 1-13.
